# EUROPEAN PATENT APPLICATION

(11) **EP 4 703 890 A1**
(43) Date of publication of application: **04.03.2026**
(21) Application number: 24222570.4
(22) Date of filing: 06.12.2023
(51) Int. Cl.: G06F 11/20, G06F 11/30, G06F 11/34, H04L 41/0654, H04L 41/147

(54) **RECONFIGURING COMMUNICATION FOR ENTITIES RUNNING ON A MULTIPLE AVAILABILITY ZONE CLOUD PLATFORM**

(62) Divisional of application: 23214581.3
(71) Applicant: SAP SE, 69190 Walldorf (DE)
(72) Inventor: YOUSOUF, Shenol Hulmi, Sofia (BG); WALTER, Thomas, Althengstett (DE); BOSHEV, Stoyan, Sofia (BG); BARTSCH, Eduard, Hockenheim (DE); ANDONOV, Antoan Nikolaev, Sofia (BG); NEICHEV, Nikolai Veselinov, Sofia (BG)
(74) Representative: Fish & Richardson P.C.

(57) **Abstract**

Methods, systems, and apparatus, including medium-encoded computer program products for recovery procedures on a multiple availability zone cloud platform include: identifying a selection of a flag from a set of flags defined at a cloud platform including multiple availability zones, wherein the flag is selected to identify an outage at a first zone of the cloud platform, and wherein each flag of the set of flags is mapped to an entity from a plurality of entities defined for the cloud platform; determining one or more entities from the plurality of entities defined for the cloud platform associated with recovering the outage based on identifying an entity corresponding to the selected flag; and in response to determining the one or more entities associated with recovering the outage, initiating a recovery procedure to reconfigure communication flows at the cloud platform associated with the determined one or more entities.

## Description

### TECHNICAL FIELD

The present disclosure relates to computer-implemented methods, software, and systems for data processing in a cloud environment.

### BACKGROUND

Software complexity is increasing and causing changes to lifecycle management and maintenance of software applications and platform systems. Customers' needs are transforming, with increased requests for flexibility in terms of processes and landscapes, and also for high availability to access software resources provided by the underlying platform infrastructure. A failure in the network connectivity or in the underlying infrastructure may cause disruptions in services provided by software applications and a reduction in their availability and performance.

### SUMMARY

The present disclosure involves systems, software, and computer-implemented methods for managing recovery reconfigurations of a cloud component when an outage or issue is identified in at least a portion of an availability zone (e.g., one or more segments of a zone, or the zone as a whole) of a multiple availability-zone cloud platform. The recovery procedure can be applied to maintain highly available services provided by entities running at the multiple-availability-zone cloud platform even when outages or issues are affecting at least a portion of the multiple availability zone cloud platform.

**In** a first aspect, the subject matter described in this specification can be embodied in one or more methods (and also one or more non-transitory computer-readable mediums tangibly encoding a computer program operable to cause data processing apparatus to perform operations), including: identifying a selection of a flag from a set of flags defined at a cloud platform including multiple availability zones, wherein the flag is selected to identify an outage at a first zone of the cloud platform, and wherein each flag of the set of flags is mapped to an entity from a plurality of entities defined for the cloud platform; determining one or more entities from the plurality of entities defined for the cloud platform associated with recovering the outage based on identifying an entity corresponding to the selected flag; and in response to determining the one or more entities associated with recovering the outage, initiating a recovery procedure to reconfigure communication flows at the cloud platform associated with the determined one or more entities.

**In** a second aspect, the subject matter described in this specification can be embodied in one or more methods (and also one or more non-transitory computer-readable mediums tangibly encoding a computer program operable to cause data processing apparatus to perform operations), including: receiving a selection of a flag from a set of flags defined at a cloud platform including multiple availability zones, wherein the selection of the flag is received to trigger a recovery execution for an entity running at a first zone of the cloud platform and mapped to the flag; determining a type of the entity; in response to determining the type of the entity, activating either a load balancer monitor or a central service to generate a respective execution plan for the recovery; and executing, by either the load balancer monitor or the central service, the generated execution plan to reconfigure communication flows at the cloud platform associated with the entity for which recovery execution is triggered.

In a third aspect, the subject matter described in this specification can be embodied in one or more methods (and also one or more non-transitory computer-readable mediums tangibly encoding a computer program operable to cause data processing apparatus to perform operations), including: executing requests from a red button agent to a red button service to obtain red flag statuses that are relevant for outages of components defined for a cloud platform, wherein the red button agent is installed at a first cloud component instance running at a first zone of the cloud platform including multiple availability zones; in response to receiving a red flag status from the red button service for the first cloud component instance, determining that the first cloud component instance is associated with an outage; and executing a recovery procedure for the first cloud component instance, wherein executing the recovery procedure includes: initiating a termination of a cloud component process running on the first cloud component instance; and configuring to send requests directed to the first cloud component instance to a second cloud component instance that is running at a second zone, wherein the second zone is a healthy zone not associated with an outage.

In a fourth aspect, the subject matter described in this specification can be embodied in one or more methods (and also one or more non-transitory computer-readable mediums tangibly encoding a computer program operable to cause data processing apparatus to perform operations), including: configuring a red button agent at a first entity running at a first zone of a cloud platform including multiple availability zones; configuring a monitor for evaluating a health status of the first entity, wherein the monitor is configured to perform checks of the health status by communicating with a health endpoint provided by the first entity, and wherein the monitor is configured to trigger a recovery execution based on detecting an outage according to evaluation of the communication with the health endpoint; determining the outage associated with the first entity based on the monitor determining a healthy status for the first entity based on the communication with the health endpoint or based on a selection of a flag at a red button service that notifies the red button agent; triggering the recovery execution, the recovery execution including: stopping a process running at the first entity at the first zone; and reconfigure communication flows at the cloud platform associated with the first entity for which recovery execution is triggered.

In a fifth aspect, the subject matter described in this specification can be embodied in one or more methods (and also one or more non-transitory computer-readable mediums tangibly encoding a computer program operable to cause data processing apparatus to perform operations), including: installing a red button agent at a first cloud component instance of a first cloud component running at a first zone of a cloud platform including multiple availability zones; executing requests from the red button agent to a red button service to obtain status of red flags that are selected for the cloud platform; in response to receiving a status of a red flag associated with the first cloud component instance, determining that the first cloud component instance is associated with an outage; and executing a recovery procedure for the first cloud component instance, executing the recovery procedure including: initiating a termination of a cloud component process running on the first cloud component instance; and reconfiguring communication flow directed to the first cloud component to a second cloud component instance that is running at a second zone, wherein the second zone is a healthy zone not associated with an outage, and wherein the first cloud component instance and the second cloud component instance are instances of the same first cloud component running at different zones of the cloud platform.

In a sixth aspect, the subject matter described in this specification can be embodied in one or more methods (and also one or more non-transitory computer-readable mediums tangibly encoding a computer program operable to cause data processing apparatus to perform operations), including: receiving a selection of a flag from a set of flags defined at a cloud platform including multiple availability zones, wherein the flag is selected to identify an outage at a first zone of the cloud platform; determining an instance of an entity running at the first zone of the cloud platform; determining a state mode of running instances of the entity at the cloud platform; in response to determining the state mode, determining rules for executing a recovery procedure for the instance of the entity running at the first zone; and in response to determining the rules, executing the recovery procedure determined based on to the state mode of running instances of the entity to reconfigure subsequent communication directed to the entity to another one or more instances running at one or more other zones of the cloud platform.

Similar operations and processes may be performed in a system including at least one processor and a memory communicatively coupled to the at least one processor where the memory stores instructions that when executed cause the at least one processor to perform the operations. Further, a non-transitory computer-readable medium storing instructions which, when executed, cause at least one processor to perform the operations may also be contemplated. In other words, while generally described as computer-implemented software embodied on tangible, non-transitory media that processes and transforms the respective data, some or all of the aspects may be computer-implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIG. 1 illustrates an example computer system architecture that can be used to execute implementations of the present disclosure.
FIG. 2 is a block diagram of an example cloud platform environment including multiple availability zones that are provided with tools and techniques to manage deployment and maintenance of applications and services in the different zones in accordance with implementations of the present disclosure.
FIG. 3 is a flowchart for an example method for implementing "red buttons" as a solution for triggering recovery procedures in accordance with the present implementations.
FIG. 4A is a flowchart for an example method for triggering a recovery procedure on a cloud platform with multiple availability zones in accordance with implementations of the present disclosure.
FIG. 4B is a flowchart for an example method for reconfiguring communication for entities running on a multiple availability zone cloud platform in accordance with implementations of the present disclosure.
FIG. 5 is a flowchart for an example method for executing a recovery procedure based on the type of an entity experiencing an outage on a cloud platform with multiple availability zones in accordance with implementations of the present disclosure.
FIG. 6 is a sequence diagram for an example method for executing a recovery based on triggering flags for centrally managed entities running at a cloud platform that is a multiple availability zone cloud platform in accordance with implementations of the present disclosure.
FIG. 7A is a sequence diagram for an example method for executing a recovery based on triggering flags for entities running at a multiple availability zone cloud platform that are managed by load balancers in accordance with implementations of the present disclosure.
FIG. 7B is a block diagram of an example system where a recovery procedure is executed in a cloud platform environment including multiple availability zones in accordance with implementations of the present disclosure.
FIG. 8A is a sequence diagram for an example method for executing a recovery based on triggering flags for entities running on a multiple availability cloud platform, where the entities are configured with agents for monitoring flags that trigger recovery procedures in accordance with implementations of the present disclosure.
FIG. 8B is a flowchart for an example method for executing a recovery procedure based on red button agents in accordance with implementations of the present disclosure.
FIG. 9 is a schematic illustration of example computer systems that can be used to execute implementations of the present disclosure.

### DETAILED DESCRIPTION

The present disclosure describes various tools and techniques for managing recoveries of cloud components in a multiple availability zone cloud platform.

In some instances, cloud platforms aim to maintain high availability solutions that can scale and provide services that meet clients' expectations. Sporadic failures of an underlying infrastructure or a network connectivity between components running on a cloud platform may cause outages that can restrict access to services provided. Configuring a cloud platform with multiple distributed deployments of instances (e.g., applications, platform core services, application services, databases, etc.) may be associated with a complex setup and high maintenance costs.

In some instances, a cloud platform may be built to include multiple availability zones (AZs) that are connected with a highly available and high-speed network. In general, each AZ can be an independent data center (e.g., associated with a different geographical location) associated with its own hardware which is connected to other AZs through a high-availability network connection. In some instances, applications can be distributed at one or more of the AZs to provide high availability of the services provided. Since an application can be executed with different instances running at each of the different AZs and/or hardware nodes (zones or data centers), the risks of failure to provide services through the application due to a downtime can be reduced. In some instances, to provide additional availability and reliability, the data centers (AZs) may be located at physical locations with close proximity to one another.

In some instances, a cloud platform landscape may be configured to include multiple AZs, where one application or service may include multiple instances running in multiple different AZs. The cloud platform can be defined as a common platform to include the multiple AZs. In some instances, the cloud platform can be accessible from the outside through a single address as an entry point, for example, one IP address. A cloud platform can be configured with multiple AZs to ensure that applications can be accessed and that the applications can provide services that are available to be consumed by clients (e.g., users or other services or applications) even when an outage is experienced in a single instance, a segment of a zone, or a whole zone. In accordance with implementations of the present disclosure, the cloud platform may be configured with a first zone and one or more second zones. In some instances, network requests received by instances running on the first zone can be provided to corresponding instances at a second zone if an outage is identified for the instance in the first zone. The availability of provided services can be ensured, as service execution can be routed through a path to access an application instance that is not associated with connectivity issues. In some implementations, the path can include several instances organized to exchange requests in a communication flow, where the instances can run at two of the zones, i.e., some of the instances run at the first zone (those that are not affected by an outage) and other instances run at a second zone (those that are used for recovery due to a detected outage in their corresponding instance at the first zone). Thus, performance of applications, services, and/or databases can be independent of issues originating from the underlying infrastructure or issues in one or more AZs where an instance of an application, a service, a database is running.

In some instances, availability zones of a cloud platform can be connected such that if one zone experiences issues such as a network outage, hardware downtime, or other issues, the platform can still remain available, as there can be at least one more zones that remain healthy. In some instances, when a cloud platform is configured with a primary zone, and if there are cloud components that run their instances in an active-passive mode, a primary zone can be a zone where active instances are running to provide services and are first requested, and a secondary zone(s) can include passive instances that can serve as a backup in case of failures in the primary zone. In some instances, cloud components can be configured to have multiple instances in active state (running in active-active mode), so that the multiple instances can serve requests, and those instances may be distributed at multiple availability zones of the cloud platform. In some instances, a primary zone of a cloud platform can be considered as the zone that is configured to receive requests from the Internet first (by default), and then, load balancers in the primary zone can distribute received requests to active instance in all of the zones of the cloud platform.

In some instances, a cloud platform can be configured to work with multiple availability zones that can provide services from one or more of the zones at the same time or sequentially. In some instances, cloud components can be configured to run with different setups or modes for their respective instances. In some instances, a cloud component can be instantiated with multiple instances over one or multiple zones, where one or more of these instances may be in an active state simultaneously. In some examples, a cloud component can run with only one instance as an active instance or can run with multiple instances over multiple availability zones as active instances that can share the load of providing services and/or resources to cloud platform users or customers. For example, databases as a cloud resource that can be provided by a cloud platform can run in active-passive modes, where an active instance is deployed in a first zone, and the active instance serves incoming requests, be it those from outside of the platform or from application or services running at the platform. The active instance can execute data replication to the passive instance(s) in the second zone(s). In this manner, in case of an issue such as a failure of providing services by a first instance of the database in the first zone, a passive instance in the second zone can be defined as a new currently active instance and that instance can continue to serve requests for database resources (e.g., until the first instance that had experienced issues can be fixed and if in a healthy state can be recovery as a first instance).

In some instances, zones of a cloud platform can be internally divided into multiple network segments. A segment of a zone may correspond to a respective category of cloud components. For example, a zone can include a segment for services, a segment for applications, a segment for databases, among other example segment categories.

In some instances, the cloud platform can provide monitoring of the health of entities defined for the cloud platform. For example, an entity can be an instance of an application, service or database, but also can include a segment of a zone, or a zone as a whole. The entities can be defined for a cloud platform based on selected criteria for monitoring and managing the lifecycle of the cloud platform. In some instances, a segment can be relevant for the cloud provider as including cloud provider services, while other segments can include services that can be associated with one or more different customers who have deployed those services in those segments. Thus, different granularity can be defined for entities on the cloud platform that can be managed individually (e.g., a service of one customer is handled differently from a service of another customer even if running in the same segment) or in combination with other entities (e.g., all core services of the platform can be associated with a single segment that can be managed as a whole to apply configurations for all core service in a similar way). In some cases, based on the monitoring, alerts can be raised in case a problem is detected in a first zone or a part thereof. In some instances, recovery procedures when a problem is detected can involve complex operations and can be time consuming, as complex reconfiguration of the cloud landscape may be required. In addition, the recovery procedure can also include a future considered recovery operation to transfer the operations back to the instances at the first zone once the issue is resolved. In accordance with the techniques described in the present application, recovery procedures can be applied with fewer requirements and constraints for the configuration of the recovery operations where in certain cases, recovery operations can be applied only to a first zone segment or instance of an application, service, or database.

The present disclosure provides techniques for segmented application of recovery procedures in a cloud platform including multiple availability zones. The segmented application can be defined for portions of the cloud platform, where if an issue is detected in a single instance of a service, recovery procedures can be triggered based on applied logic for executing recoveries for that single instance. In some cases, the recovery can include operations that are relevant only for the single instance. In other cases, based on considerations of the type of the instance, the recovery can be considered to be applied for a broader range of entities, for example, the whole segment where the single instance is running. For example, if a core service is detected to be experiencing issues, since the core service can be of high importance for the service level of the platform and closely coupled to other core services running in a core-service segment, the whole core service segment can be considered as relevant for executing a recovery procedure.

In some instances, a recovery procedure can be triggered manually or in an automated way based on monitoring of the health status of the cloud platform. In some instances, flags can be defined for different entities defined for the cloud platform, where based on triggering a flag, the entities of the cloud platform can be notified, and trigger recovery procedures as defined for the particular entity.

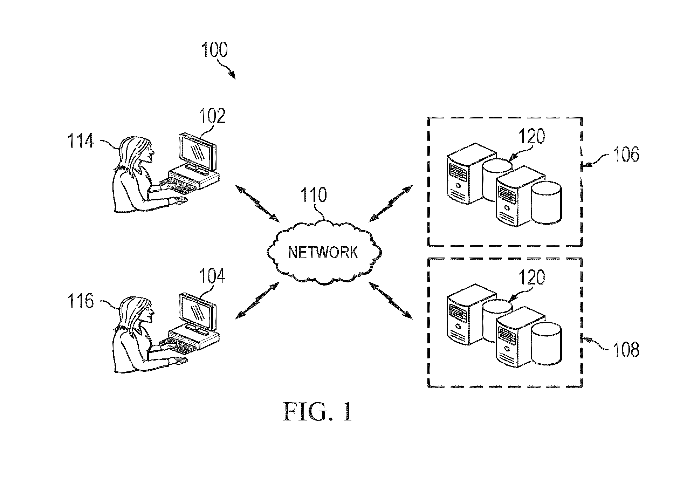

FIG. 1 depicts an example architecture 100 in accordance with implementations of the present disclosure. In the depicted example, the example architecture 100 includes a client device 102, a client device 104, a network 110, a cloud environment 106 and a cloud environment 108. The cloud environment 106 may include one or more server devices and databases (e.g., processors, memory). In the depicted example, a user 114 interacts with the client device 102, and a user 116 interacts with the client device 104.

In some examples, the client device 102 and/or the client device 104 can communicate with the cloud environment 106 and/or cloud environment 108 over the network 110. The client device 102 can include any appropriate type of computing device, for example, a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some implementations, the network 110 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In some implementations, the cloud environment 106 can include at least one server and at least one data store 120. In the example of FIG. 1, the cloud environment 106 is intended to represent various forms of servers including, but not limited to, a web server, an application server, a proxy server, a network server, and/or a server pool. In general, server systems accept requests for application services and provide such services to any number of client devices (e.g., the client device 102 over the network 110).

In accordance with implementations of the present disclosure, and as noted above, the cloud environment 106 can host applications and databases running on host infrastructure. In some instances, the cloud environment 106 can include multiple cluster nodes that can represent physical or virtual machines. A hosted application and/or service can run on VMs hosted on cloud infrastructure. In some instances, one application and/or service can run as multiple application instances on multiple corresponding VMs, where each instance is running on a corresponding VM.

In some instances, the cloud environment 106 and/or the cloud environment 108 can be configured in a multiple-AZ architecture, where the cloud environments can correspond to data centers that are connected with a highly available network and provide high-speed communication and high-network bandwidth for data exchange. In some instances, the data centers can be located in close physical proximity to each other. In some instances, a multiple availability zone cloud platform can be defined in addition to the two cloud environments 106 and 108 to provide a common cloud platform that can make it transparent for users and customers that the operations are performed on multiple AZs. The cloud platform may receive requests for running applications, services, and/or databases that can run on cloud environment 106 and/or cloud environment 108. These applications, services, and databases may be designed, developed, executed, and maintained in relation to different customers and based on configured accounts that define process execution for the applications, the services, and the database.

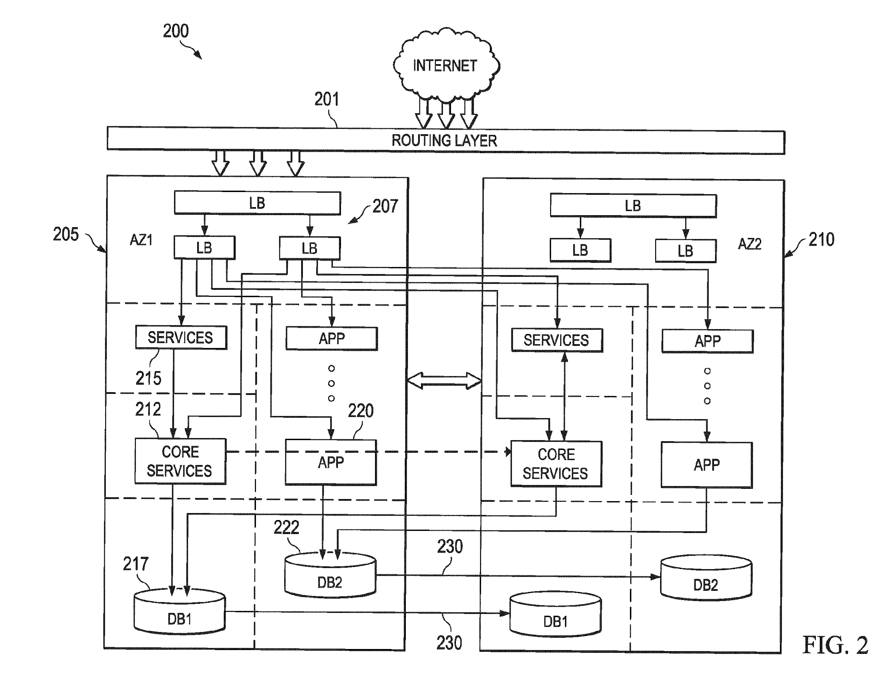

FIG. 2 is a block diagram for an example cloud platform environment 200 including multiple availability zones that are provided with tools and techniques to manage deployment and maintenance of applications and services in the different zones in accordance with implementations of the present disclosure.

In some instances, the cloud platform 200 is a multiple-availability zone cloud platform that include multiple data centers that can correspond to the cloud environment 106 and/or the cloud environment 108 of FIG. 1. The cloud platform 200 can include multiple AZs, although only two are illustrated in FIG. 2. In some instances, the multiple AZs can be defined as multiple data centers that can execute multiple instances of a single application, service, and/or databases, in different segments.

In some instances, the cloud platform 200 includes a first AZ (AZ1) 205 and a second AZ (AZ2) 210. In some instances, the cloud platform 200 provides services through deployed application(s) and service(s). In some instances, a particular application can be deployed as a single AZ application or as a multiple AZ application. In the case that an application is deployed as a multiple AZ application, the application can be deployed with at least one instance on each of the two AZs. In the case that the cloud platform is defined with a first zone and a second zone(s), the instance running at the first zone can be the one to which network calls are first routed. In the example cloud platform 200, the first AZ (AZ1) 205 is configured as the first AZ, and thus when requests are received from the Internet, the requests are routed through the routing layer 201 to the AZ1.

In some instances, the two AZs - AZ1 205 and AZ2 210 - can be executed as two data centers that are physically located relatively close to each other (e.g., having close physical proximity below a given threshold distance value). In cases where the two AZs have a close physical proximity to each other, the two AZs may experience low latency and high-speed of interconnection when they communicate (e.g., exchange information and/or requests). In such instances, when the two AZs communicate, they can perform data replication and communication between service and application instances located in the two data centers faster and more reliably.

In some instances, a multiple instance cloud component can include a first instance running at the AZ1 205 and a second instance running at AZ2 210. In some implementations, load balancers can be defined at each of the availability zones to dispatch requests received at one zone to respective instances of services, applications, or databases. In some instances, load balancers 207 running on the first zone of the cloud platform, i.e., AZ1 205, can receive external requests and dispatch those requests to different services, core services, and applications that can be running at either one of the zones 205 and 210. The services 215, core services 212, and applications 220 running on the AZ1 205 can provide services to end users and may be coupled to obtain resources from a database segment of the cloud platform. The services 215, the core services 212, and the applications 220 have corresponding instances at the AZ2 210, where in case of an issue at an entity, the recovery procedure can be triggered and can reconfigure communication flows directed to the instances running on the first zone to instances running on the second zone. The AZ1 205 includes a database segment where two different databases are running. The databases 217 and 222 are in an active state as they are running on the first AZ. The databases 217 and 222 have corresponding instances that are in a passive state while the instances on the first zone are in an active state.

In some implementations, the load balancers 207 of the AZ1 can process requests received from the internet and dispatch those to either one of the AZs based on dispatch criteria that can include one or more requirements for processing a request at a particular instance of the application. The criteria can be associated with whether a recovery procedure is triggered for one or more entities of the cloud platform, such as for the AZ1 as a first zone, for one of the segments of the AZ1 (e.g., an application segment for applications including applications 220, a core service segment for the core services 212, a database segment for either one of the databases 217 and 222, or defined for both of them). In some instances, dispatching requests to instances can be performed with consideration of the load currently experienced by an instance of a service or an application. In some cases, one application can have two or more instances running on one AZ, such as the AZ1 205. Thus, when a request for accessing the application is received, the request can be dispatched to an instance of the application that has least number of requests that are currently being processed. A determination of an instance of the application to handle a request can be based on evaluation of data associated with the multiple instances of the application.

In some instances, the cloud platform 200 can include databases that can be used by services and applications running on the cloud platform 200. In some instances, high availability for the databases at the database segments (e.g., defined as a persistency layer for the cloud platform 200) can be achieved by configuring a redundant setup of database instances in which data is replicated between the instances (at data synchronization 230). In some instances, the different DB instances can be located or managed in different AZs. In some instances, and depending on the databases, the replication can be performed either unidirectionally or bidirectionally.

In some instances, an application and/or a service can work primarily with one of the DB instances of a given database, while in others, the application and/or service works and interacts with each instance, or at least a subset of two or more instances. In some instances, the manner of communication between an application and/or a service with instances of the database can be based on the DB's capabilities. By providing flexible configuration for an application or a service to work with one or more instances of a database, processing of requests from the application or service related to the database can be performed without interruption.

In some instances, only an active load balancer of the load balancers 207 on AZ1 205 can be responsible for handling incoming traffic. In some instances, both AZs can be running and providing resources, where one of the AZs may be associated with the active first level load balancer that will handle incoming requests to the AZ related to application and or services on the cloud platform 200. In cases where one of the AZs is experiencing an outage for the whole zone, a first level load balancer instance at the other AZ, i.e., AZ2 210, can be automatically configured as in active mode (e.g., in the case that it was not the active instance).

In some instances, the load balancers 207 of AZ1 205 also include second level load balancers that are managed by the first level load balancer (the load balancers can be defined in a tree structure as shown on FIG. 2) and are responsible routing the traffic to a specific application, for example, based on an application location (e.g., URL) of the application.

In some instances, when an application instance is started at the cloud platform 200, the application instance is registered in a registry of the second level load balancer (e.g., a pool of load balancers). Such a registry is maintained at both AZs. Based on this registry, the second level load balancer can route the traffic to different application instances. An instance of the second level load balancer can route a received request to the AZ where the instance of the second level load balancer resides, or the other AZ. Such routing is possible because the second level load balancer registers information for each application (and application instance) running on the cloud platform 200 at each instance of the second level load balancer.

In some instances, flags can be defined to trigger execution of recovery procedures for individual entities defined for the cloud platform 200. In some instances, a set of flags can be predefined, where each flag can be mapped to an entity defined for the cloud platform. An entity can be a zone of the platform, a segment of a zone of the platform, a service running on the platform, an application running on the platform, or a database providing persistency for applications and services running on the platform. In cases where an outage is detected (e.g., detected manually based on user monitoring of the platform or in an automated way based on predict an outage according to prediction modeling techniques), a recovery procedure can be triggered by selecting a flag that corresponds to the scope of the outage. For example, if it is determined that a database on AZ 1 205 is down, a flag for a database being down can be triggered. Such flag triggering can create events that are monitored by the cloud platform (e.g., agents running on instances of services and apps, load balancers, central management services, or else), and respective recovery procedures can be triggered to reconfigure process flows only for the portion of the platform (e.g., a segment, or a particular instance) that is affected by the failure (e.g., database being down). The techniques described in the present application can trigger recovery procedures for components incrementally. For example, if a recovery procedure for a segment X is initiated, and then an outage (or other issue) is detected at another segment Y, then the recovery procedure for segment Y can also be triggered to run in parallel (or at least partially in parallel) to the execution of the recovery procedure for segment X.

In some instances, the recovery techniques according to the present disclosure offer different levels of granularity for applying recovery actions, which can be targeted to address the issue, without requiring the recovery of a whole first zone to recover a specific segment or a specific cloud component (e.g., a core service). Instead, with the recovery techniques as described here, the recovery can flexibly define the scope of the entities on the cloud platform that would be associated with the triggered recovery procedure. Such flexibility and segmentation of the portion of the zone that is affected by the recovery procedure can support fast transition from a health status "down" to a healthy status since the number of reconfigurations can be smaller, while at the same time covering the required actions to return the system to a healthy state.

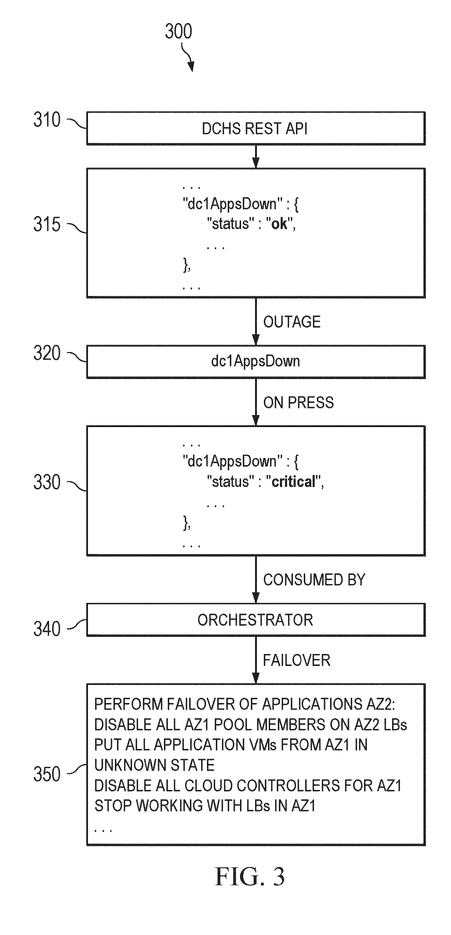

FIG. 3 is a flowchart for an example method 300 for implementing "red buttons" as a solution for triggering recovery procedures in accordance with the present implementations. The example method 300 is configured to be executed when an outage is determined for an application, such as an application of the application 220 of FIG. 2. The method 300 defines steps to trigger and perform a recovery for an application, which can be executed in the context of triggering and performing recoveries as discussed for the cloud platform 200 with different levels of granularity as described in relation to FIG. 2.

In some implementations, multiple flags can be defined for entities defined for the cloud platform in accordance with the techniques for managing recoveries as described in relation to FIG. 2. In some instances, selection of a flag from the flags can trigger the execution of a recovery procedure. The recovery procedure can be executed based on specific implementations and configurations at the cloud platform.

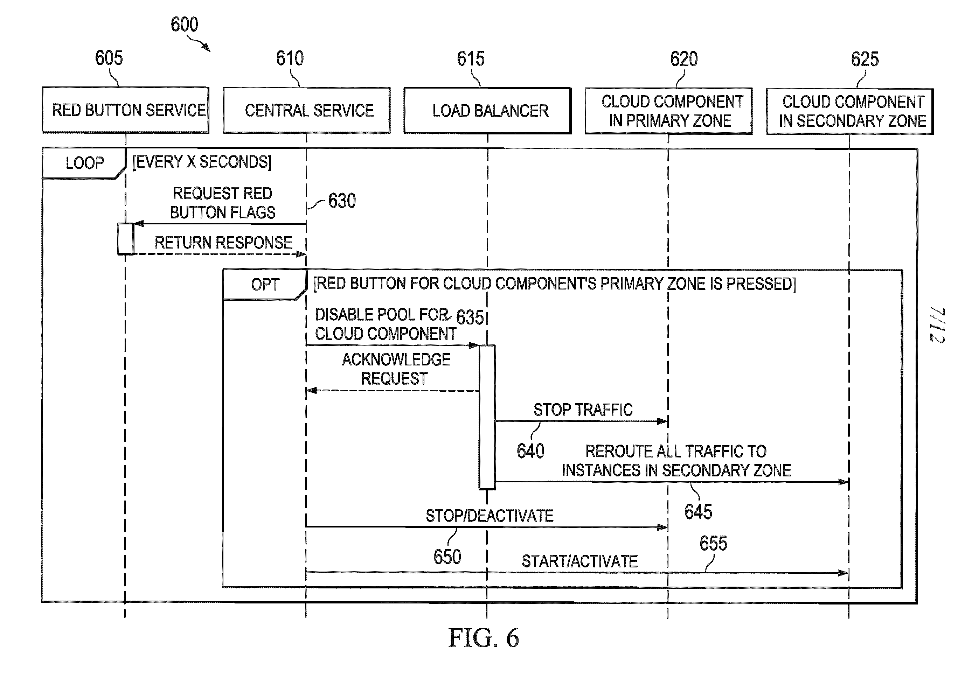

In some instances, the selection of a flag can indicate modification of the health status of an entity mapped to the flag to a critical state. One or more entities from the plurality of entities can be determined to be associated with reconfiguring the communication flow to recover from the outage. For example, the determination of the one or more entities can be based on an evaluation of the critical state of the entity mapped to the selected flag at an orchestrator component running for the cloud platform to manage communication flows. Other options for evaluation of a changed status based on a selected flag can be applied, for example, as described in relation to FIG. 6, 7A, 8A, and 8B.

A data center health service (DCHS) 310 can be defined at a cloud platform, where the service 310 can maintain information for the statuses of different entities defined for the cloud platform. The DCHS 310 provides an interface that can be called on to determine the status of an application. For example, as shown at 315, the status of an application on a first zone (DC1) is determined to be healthy (status "ok"), for example, based on the status of the application segment at the first zone. In some implementations, the recovery can be handled based on logic implemented by an orchestrator 340 that is defined to manage the lifecycle of the cloud platform.

In some instances, multiple flags can be defined for the cloud platform as presented in Table 1. The flags can be implemented as "red buttons" and provided at a user interface, where a selection can be made by a user or based on input from another service. A selection of a button can trigger the corresponding flag. The flags can trigger execution of recovery procedures that are at a different granularity level and thus the segmented mechanism for applying recovery can be practically executed at the cloud platform. Each flag as presented in Table 1 below is an indicator for a problem related to a specific cloud component (e.g., core services (e.g., Infrastructure Element (IEL) segment), segments (e.g., services segment), load balancer(s) (annotated as LBs), database (annotated as DB1 and DB2 at dc1, as examples of different databases), the whole first zone (annotated as dc1). Raising the flag after pressing a corresponding "Red Button" can trigger a reaction in services or monitors that monitor changes in states of the flags. Based on identification that a flag is raised, a corresponding recovery procedure can be initiated.

**Table 1**

| | |
|---|---|
| dc1Down | ➢ Failover of all datacenter segments from AZ1 to AZ2 |
| dc1AppsDown | ➢ Failover of applications segment from AZ1 to AZ2 |
| dc1DB1sDown | ➢ Failover of all DB1s from AZ1 to AZ2 |
| dc1DB2sDown | ➢ Failover of all DB2s from AZ1 to AZ2 |
| dc1LBsDown | ➢ Failover of loadbalancers (Internet traffic switch) from AZ1 to AZ2 |
| dc1lelDown | ➢ Failover of IEL segment (Core services) from AZ1 to AZ2 |
| dc1ServicesDown | ➢ Failover of Services segment from to AZ1 to AZ2 |

At 320, a flag for applications on a first zone (AZ1) is raised based on a selected red button to identify that the applications are experiencing issues. Once the flag is selected at 320, the DCHS 310 determines that the status of the applications is "critical". Such a status change at the DCHS 310 can trigger the orchestrator 340 to initiate performance of a recovery procedure relevant for the applications (and to the selected flag). In some instances, by selecting the red button "dc1AppsDown" 320 that corresponds to a flag for triggering recovery for applications running on the first AZ1 zone, a recovery procedure is initiated by the orchestrator 340 because the orchestrator 340 is configured to listen for events created based on flags (or "red buttons" selections). For example, a recovery procedure 350 can be triggered by the orchestrator. The recovery procedure 350, for example, can define a set of operations to be performed for failover of the applications from AZ1 to AZ2. For example, the set of operations can include:
- Disable all members of AZ1 that are registered at load balancers on AZ2;
- Change the state of applications from AZ1 into an "unknown" state;
- Disable all cloud controllers for AZ1; and
- Stop working with load balancers in AZ1.

In some instances, cloud controllers configured for availability zones store configurations defining specifics for instantiating a new application, such as relevant hardware and locations to start a new application VM(s) (or container(s)) in the cloud platform. The cloud controllers can be separated between zones, and therefore disabling controllers on AZ1 can prevent starting new application instances on AZ1. The cloud controllers can be configured to work on multiple zones, i.e., there may be no need to activate the controller in a second zone (e.g., in AZ2) during a recovery from AZ1 to AZ2. Usually, when a request comes to start N instances of an application (for example, to serve a greater load) and if the multi-AZ landscape is healthy, then the orchestrator of the platform can use the cloud controllers to start instances in each of the zones (e.g., divide them evenly or based on other ratios that can support better distribution of the load).

In some instances, if one or more application instances are down on a first zone AZ1 of a cloud platform, the respective applications can continue to operate from their remaining instances in the second zone AZ2. In some instances, an application operator may need to manually start additional instances of the applications in AZ2 to meet the increased load, or such initialization of new instances can be automated based on received indications for instances being down in the first zone AZ1.

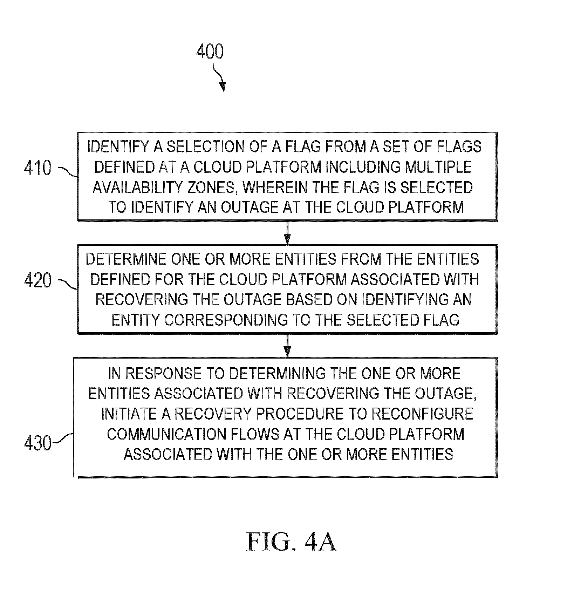

FIG. 4A is a flowchart for an example method 400 for triggering a recovery procedure on a cloud platform with multiple availability zones in accordance with implementations of the present disclosure.

In some instances, applications (or other entities, such as services) can be hosted in a cloud environment, and can provide services for consumption based on requests, for example, requests from end-users and/or customers. Entities running on the cloud platform may execute logic that includes processing received requests and providing responsive resources or data, dispatching received requests to other entities, querying database entities, and accessing external resources to gather data or to request services, among other examples of implemented processing logic for the cloud platform.

In some instances, the example method 400 may be executed at a multiple availability zone cloud platform that can be similar or substantially similar to the multiple availability zone cloud platform 200 of FIG. 2. The cloud platform can be configured to execute recovery procedures based on flag selection that triggers executions related to different portions of the entities defined for the cloud platform. The flags can be as presented in Table 1.

At 410, a selection of a flag from a set of flags (e.g., as presented on Table 1) defined at the cloud platform including multiple availability zones is identified. The flag can be selected to indicate an outage that can restrict access to services provided by an entity mapped to the flag.

Each flag of the set of flags is mapped to an entity from entities defined for the cloud platform. For example, the entities can be defined to include zones, segments, applications, services, databases. The flag is selected to identify an outage at a first zone of the cloud platform. For example, the identified outage at the first zone can be an outage for the applications running at the first zone as described in relation to FIG. 3.

In some instances, the selection of the flag can be a manual step performed by a user interacting with a user interface that provides buttons for triggering flags. In some other instances, the selection of the flag can be performed based on triggering initiated from a service or application that has identified the presence of an outage. In some instances, the outage at the cloud platform can be identified based on monitored data associated with a health status of the cloud platform that is input at a trained machine-learning model. The trained model can use the monitored data as input to determine whether an outage is present at an entity running on the cloud platform.

In some instances, machine learning techniques can be applied on timeseries data for historical performance of instances running on the cloud platform. The machine-learning model can be trained to predict future values for the health status of instance of applications, services, core service, databases, or segments and zones as areas defined at the cloud platform. The machine-learning model can be trained based on past historical data to determine when a critical state of an entity can be expected. The trained model can be a deep neutral network. In some instances, the prediction of the health status can be done based on a combination of several models. Based on such prediction, by obtaining data for the performance of instances running at segments and zones of the cloud platform, a predicted outage can be determined, and such prediction can be used as input to trigger the selection of a flag and thus to trigger a recovery procedure in accordance with implementations of the present implementations.

At 420, one or more entities from the entities defined for the cloud platform that are associated with recovering from the outage are determined. The determination is based on identifying an entity corresponding to the selected flag. In the example of selecting a flag associated with the application running at the first zone, the identified entity can be the application segment on the first zone. By identifying that the application segment is the entity associated with the selected flag, the entities that can be determined as associated with recovering from the outage can be, for example, corresponding applications running on a second zone (e.g., AZ2 210 of FIG. 2). Further, and depending on the logic for the execution of the recovery when associated with the application segment, other entities can be defined as relevant for the recovery. For example, because the issue is associated with applications that are consuming services, such as core services 212 or services 215, the recovery process for the outage of the application segment can be configured to determine that the instances of those core services 212 and the services 215 are relevant for the outage, and their corresponding instances running at the second zone can be determined as relevant for the recovery from the outage. For example, process flows directed to an application that has a "down" status can be reconfigured to be directed to instances at the second zone, and when the instance of the application at the second zone is running, the application instance at the second zone can consume services from instances at the second zone. Thus, process flows related to the instances of the services 215 and the core services 212 can also be determined as relevant to the outage and set to an "inactive" status to activate their corresponding instances on the second zone while the issue is resolved. In some instances, the determination of the one or more instances associated with the recovery from the outage can be determined at an orchestrator (such as the orchestrator 340 of FIG. 3). The orchestrator can be configured to manage communication flows defined at the cloud platform and reconfigure communication associated with an entity having an instance that is affected by the outage to instances of the entity that are at another zone (or multiple zones). In some instances, when the recovery procedure is a failover procedure, then, calls directed to instances at the first zone can be redirected to instances at the second zone (when the instances are failed over to that second zone). Further, in some cases the orchestrator can evaluate the triggered flag and consider reconfiguring the communication in the flows to redirect communication from an instance affected by an outage to other instances running at another zone or zones rather than running at the first zone (e.g., associated with the triggered flag).

At 430, in response to determining the one or more entities associated with recovering from the outage, a recovery procedure is started to reconfigure communication flows at the cloud platform associated with the identified entity by reconfiguring the communication flows and providing services through the one or more determined entities.

In some instances, the initiation of the recovery procedure can include determining a new process flow to replace a previous process flow including the entity mapped to the selected flag. The new process flow can exclude the entity mapped to the selected flag and replace it with a corresponding entity at another zone of the cloud platform that is defined for recovery of the entity mapped to the selected flag. Also, services provided by the entity mapped to the selected flag can be disabled and requests to be received by the entity can be provided to the corresponding entity at the other zone.

In some instances, a notification can be received that the entity that was failed over to the second zone is running successfully at the first zone. In response to the received notification, a recovery procedure can be initiated to reconfigure communication flows and define flows through entities running at the first zone of the cloud platform. For example, previously defined flows before the identification of the outage can be reconfigured.

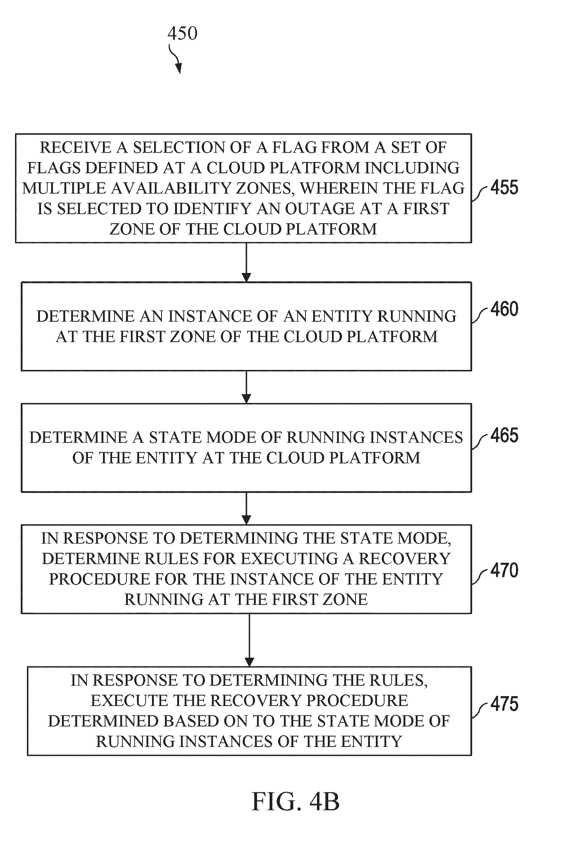

FIG. 4B is a flowchart for an example method 450 for reconfiguring communication for entities running on a multiple availability zone cloud platform in accordance with implementations of the present disclosure. In some instances, entities (e.g., load balancers, applications, databases, or services, among other examples) can be hosted on a cloud platform and can provide services to end users or external applications or platforms. For example, requests for services for consumption from a service hosted on the cloud platform can be received from end-users and/or customers. Entities running on the cloud platform may execute logic that includes processing received requests and providing responsive resources or data, dispatching received requests to other entities, querying database entities, and accessing external resources to gather data or to request services, among other examples of implemented processing logic for the cloud platform.

In some instances, a plurality of entities can run on the cloud platform, where each entity can run with one or more instances distributed over one or more availability zones. The entities running on the cloud platform can include one of
- a zone segment of the cloud platform;
- a cloud component running at a segment of a zone of the cloud platform;
- a zone of the multiple availability zones of the cloud platform; or
- a load balancer defined for multiple zones of the cloud platform.

In some instances, various types of entities can run on the cloud platform at one time, or at different times, and an entity of a given type can run with instances at one or multiple of the availability zones. In some instances, the entity can run in a particular state of running instances, such as active-active mode where all instances of the entity are in an active mode, or an active-passive mode, where one instance is an active instance and the other instances can take over the active state in cases where the primary instance has its processes terminated (e.g., due to an outage).

In some instances, the example method 450 may be executed at a multiple availability zone cloud platform that can be similar or substantially similar to the multiple availability zone cloud platform 200 of FIG. 2. In some instances, the cloud platform is not limited to having two availability zones and/or limited to having the two zones as a primary zone and a secondary zone. The cloud platform can include three or more availability zones that all provide infrastructure to run instances of entities and have active instances at each of the availability zones. The cloud platform can be configured to execute recovery procedures based on flag selection that trigger executions related to different portions of the entities defined for the cloud platform. The flags can be as presented in Table 1 in some implementations.

At 455, a selection of a flag from a set of flags defined at the cloud platform including multiple availability zones is received. The selection of the flag can include an identification of a selection of a flag as described in relation to 410 of FIG. 4A. The flag can be selected to identify an outage at a first zone of the cloud platform. In some instances, the selection of the flag can be received (e.g., based on a request for flag statuses or as a push notice from a red button service) to trigger the recovery procedure for instances running at the first zone of the cloud platform and mapped to the flag. In some instances, the selection of a flag can be a selection of a flag as in the examples of Table 1. The selection can be performed through a user interface. In some instances, when a flag is selected at a red button service, the red button service can process the selection and determine a portion of the cloud platform that is affected by an outage. In some instances, the selection of the flag can be performed by a user of the cloud platform such as a user that monitors the health of the cloud platform or by an entity such as a service for evaluating and/or monitoring the health of the cloud platform. In some instances, the selection of the flag can be performed through a user interface that notifies the red button service of the received selection.

In some instances, the flag can be associated with a zone or zones of the cloud platform that is associated with an outage. In some instances, the flag that is selected can be associated with a segment of a zone of the cloud platform and, based on such flag selection, entities running at that segment may be determined to be affected by the outage. Other example associations of flags with portions or with the whole of a zone or multiple zones of the cloud platform can be defined and processed in a substantially similar manner.

At 460, an instance of an entity running at the first zone of the cloud platform can be determined. For example, a first instance of a first application running on the first zone can be determined based on the received selection at 455.

At 465, a state mode of running instances of the entity at the cloud platform can be determined. As discussed previously, the state mode can be determined to be either an active-active mode or an active-passive mode.

At 470, in response to determining the state mode, rules for executing a recovery procedure for the instance of the entity running at the first zone can be determined. In some instances, when the state mode of running instances of the entity is determined to be an active-passive mode, the determined rules for executing the recovery procedure include rules for reconfiguring the subsequent communication by executing a failover procedure to redirect the subsequent communication directed to the entity to an instance of the entity running in another zone of the cloud platform that is not associated with the selected flag. In some instances, when the state mode of running instance of the entity is determined as an active-active state, the determined rules for executing the recovery procedure include rules for reconfiguring the subsequent communication by transmitting requests for services from the entity only to other one or more instances running at the one or more zones of the cloud platform, the other one or more zones not being associated with the selected flag.

At 475, in response to determining the rules, the recovery procedure determined based on to the state mode of running instances of the entity can be executed to reconfigure subsequent communication directed to the entity to another one or more instances running at one or more other zones of the cloud platform.

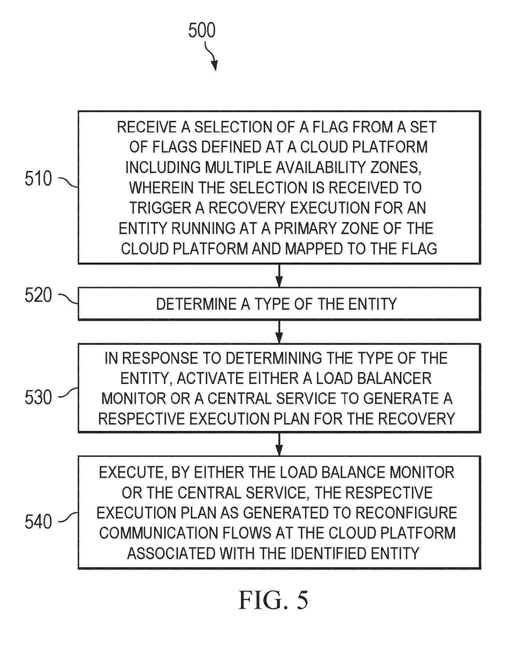

FIG. 5 is a flowchart for an example method 500 for executing a recovery procedure based on the type of an entity experiencing an outage on a cloud platform with multiple availability zones in accordance with implementations of the present disclosure.

In some instances, applications (or other entities, such as services) can be hosted in a cloud environment such as the cloud platform 200 of FIG. 2. Entities running on the cloud platform may execute logic that includes processing received requests and providing responsive resources or data, dispatching received requests to other entities, querying database entities, and accessing external resources to gather data or to request services, among other examples of implemented processing logic for the cloud platform. The cloud platform can be configured to execute recovery procedures based on flag selections that trigger executions related to recovery procedures at the cloud platform. The flags can be as presented in Table 1. The recovery execution can be based on different implementations according to the type of entities that are indicated as associated with an outage (or other failure).

At 510, a selection of a flag from a set of flags is received. The set of flags are defined at a cloud platform including multiple availability zones. The selection is received to trigger a recovery execution for an entity running at a first zone of the cloud platform and mapped to the flag.

At 520, the type of the entity is determined. In some instances, the type of an entity can be determined based on the manner of handling the lifecycle of the specific entity. For example, some applications and databases are managed by a central platform service or a subsystem. In those cases the central platform service can be configured to execute a recovery procedure when a flag is received to trigger a recovery procedure to recover the performance of the failed entity. In another example, some applications or services can be registered for monitoring at load balancers as they are not managed centrally and thus a central component may not have the tools to execute a recovery procedure for those applications or services. In another example, some applications or services may include individual logic for handling recovery, where such applications or services may be configured with individual agents that are preinstalled together with the provisioning of the applications or services and those agents can manage the lifecycle of the instances without using a central component (e.g., can stop an instance, can redirect communication flows, others).

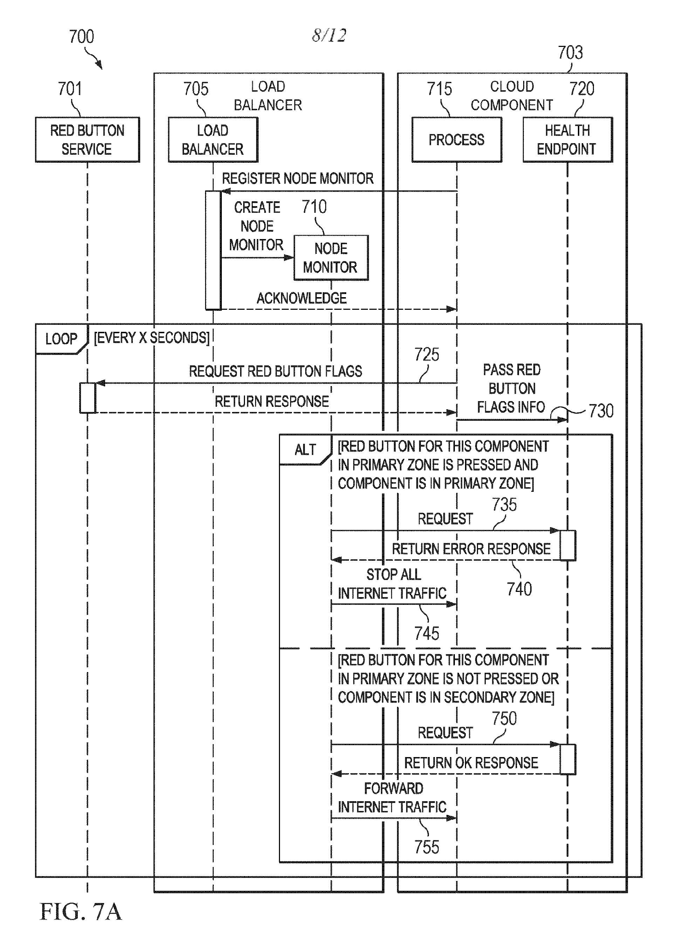

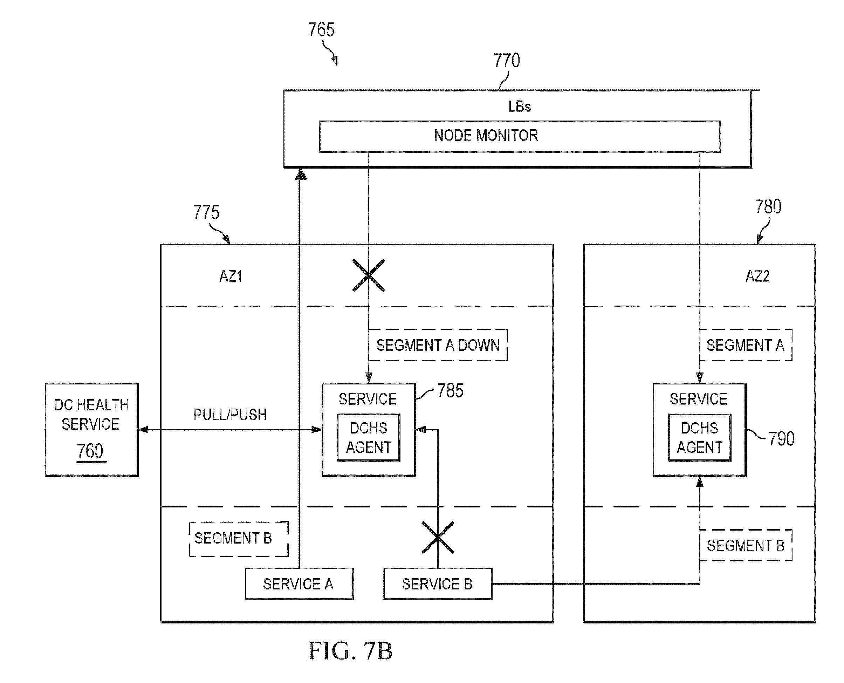

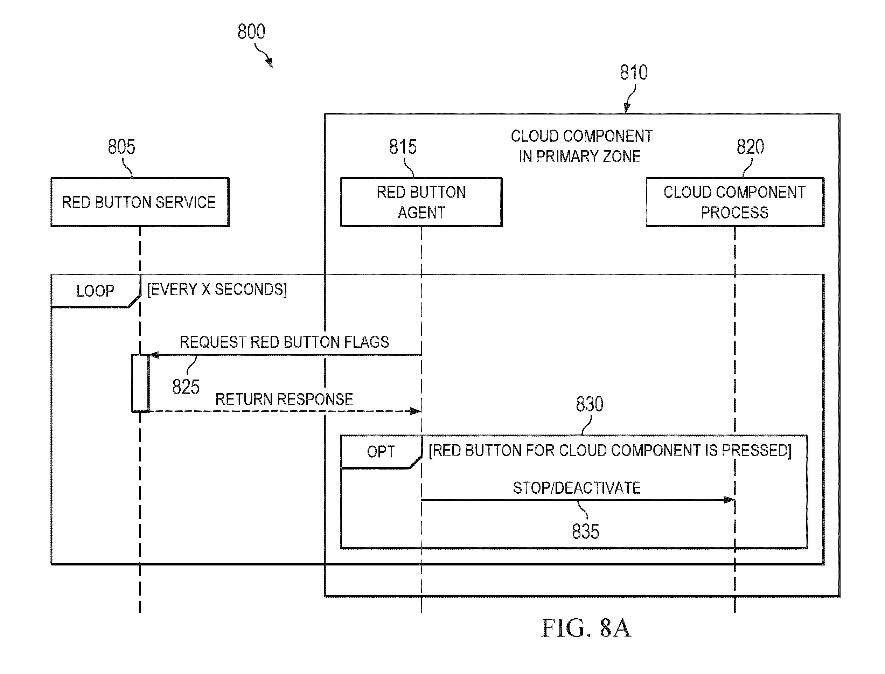

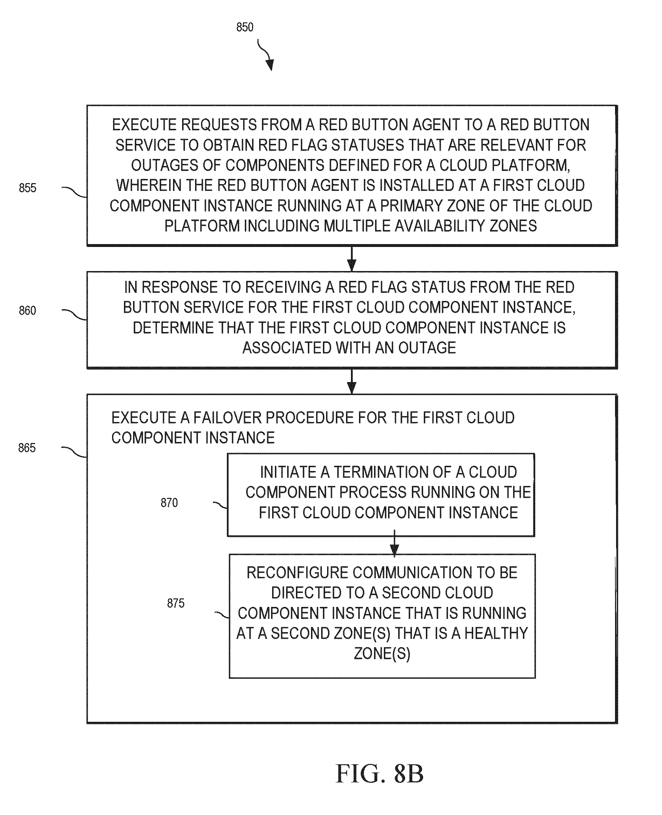

In some instances, the type of the entity can be determined based on the instance that manages the lifecycle of the entity, where a set of types can be defined for a cloud platform. In some instances, it may be possible that one cloud platform includes entities of only a single type and handles their recovery procedures in a similar manner. The different manners of implementing the different recovery procedures based on the type of the entity are described in further detail in relation to FIG. 6 (for central components), FIGS. 7A and 7B (for the load balancers), and FIGS. 8A and 8B (for the agents).

At 530, in response to determining the type, either a load balancer monitor or a central service to generate a respective execution plan for the recovery. The execution plan can include a set of steps for recovering from the outage by failing over the entity that was flagged to an instance at the second zone and reconfiguring the communication flows. For example, the plan for the recovery can be such as the set of steps to be performed for failing over applications at 350 of FIG. 3.

In some instances, a first set of entities of a first type of entities can be configured for recovery executions at the central service. The central service can be configured to manage outages associated with the first type of entities at the cloud platform including multiple availability zones. In some instances, a second set of entities of a second type of entity can be configured for recovery executions at load balancers at the cloud platform. Further types of instances can be configured with specific implementations for recovery executions. In those cases, their types can be determined and identified when generating respective recovery executions.

At 540, the respective execution plan as generated is executed by either the load balancer monitor or the central service to reconfigure communication flows at the cloud platform associated with the entity for which recovery execution is triggered.

FIG. 6 is a sequence diagram for an example method 600 for executing a recovery based on triggering flags for centrally managed entities running at a cloud platform that is a multiple availability zone cloud platform in accordance with implementations of the present disclosure.

In some instances, applications (or other cloud components, such as services) can be hosted in a cloud environment such as the cloud platform 200 of FIG. 2. Entities running on the cloud platform may execute logic that includes processing received requests and providing responsive resources or data, dispatching received requests to other entities, querying database entities, and accessing external resources to gather data or to request services, among other examples of implemented processing logic for the cloud platform.

The cloud platform can be configured to execute recovery procedures based on flag selection that trigger executions related to selected components that are identified through raised flags defined at the cloud platform. The flags can be as presented in Table 1. The recovery execution as defined at method 600 is related to an implementation relevant to entities that are managed by a central service 610.

In some instances, a red button service 605 can be implemented at the cloud platform, where different flags can be defined. The red button service 605 can be substantially similar to the DCHS 310 of FIG. 3 as it can provide similar functions with respect to identifying flags and responding with relevant actions. When a flag is triggered, for example, through the selection of a button as discussed in relation to FIG. 2 and 3, an event for a changed status of an entity at the cloud platform is created, and such an event can be consumed by the central service 610.

For example, at 630, the red button service 605 is requested by a central service to provide a response for the status of the flags for the cloud platform that is managed by the central service 610. The central service 610 can obtain a response, whereby it can determine whether there is a selection of a flag for a cloud component running on the cloud platform. If there is a flag that is selected for a cloud component, the central service 610 can send a request to a load balancer 615 of the cloud platform to disable the pool of the cloud component 635. In response to the disabling of the pool of the cloud component, the load balancer 615 can send a request 640 to stop traffic towards the cloud component 620 in the first zone. The load balancer 615 can send a request to reroute network traffic that is directed to the cloud component 620 in the first zone to a corresponding cloud component 625 in the second zone of the cloud platform.

The central service 610 can deactivate the cloud component 620 running in the first zone of the cloud platform, and can activate the cloud component 625 running in the second zone. The cloud component 620 and the cloud component 625 are corresponding instances of a cloud component, such as an application, service or a database, whose deployment and lifecycle is managed by the central service 610.

In some instances, databases or persistency services can be considered as a type of an entity that can be configured to work in active and passive states for their different instances in respective zones of the multiple availability cloud platform. The database instances or persistency service instances running in a second zone can be active for replication from their corresponding instances in the first zone while the instances in the first zone are serving requests. Thus, the instances in the second zone do not serve any other request but for replication (e.g., synchronization between the data stored in each of the zones). In cases where there is an outage in the first zone, the instances in the second zone can be configured in an active state and can overtake the responsibility to serve requests while the instance in the first zone recovers.

In some instances, cloud components that are applications can run as multiple instances in active mode in multiple zones. Thus, when traffic towards an application instance is stopped, the instance running in the second zone can start receiving re-routed traffic from a load balancer, as described in steps 640 and 645 of FIG. 6.

By implementing a central service that can handle the lifecycle of a cloud component and can take the necessary actions to execute a recovery procedure for that component, the maintenance of instances of that component can be executed faster, as no manual intervention may be needed for an operator to trigger each task of the recovery plan that is to be executed. Such management of recovery procedure automates the process and ensures high availability of the centrally managed components.

FIG. 7A is a sequence diagram for an example method 700 for executing a recovery based on triggering flags for entities running at a multiple availability zone cloud platform that are managed by load balancers in accordance with implementations of the present disclosure.

In some implementations, a red button service 701 can be configured at a cloud platform in a same or substantially similar manner as the red button service described in relation to FIG. 6. The red button service 701 can be implemented at a cloud platform that is the same or substantially similar to the cloud platform 200 of FIG. 2.

A cloud component 703 is running at a first zone of the cloud platform. The cloud component 703 can be an application, service, or a core service, as described in relation to FIG. 2. The cloud component 703 can be a component that is to be monitored for outages (or other issues) based on monitors registered at a load balancer 705.

The load balancer 705 can receive a request from a process 715 running at the cloud component 703 to register the cloud component 703 at the load balancer 705. The load balancer 705 can create a node monitor at 710.

The red button service 701 can be configured to provide the status of the selected flags. The process 715 requests the status at 725 from the red button service and provides the information about the status to a health endpoint 720 at the cloud component 703.

If a flag is selected for the component 703 and the component 703 is running in the first zone, the node monitor 710 can be notified (740) by the health endpoint 720 that an outage is being experienced by the cloud component 703. The node monitor 710 can initiate a termination of network traffic towards the process 715 of the cloud component 703.

In some instances, when a red button flag is defined for a given component, and the information is provided to the health endpoint 720 at 730, the health endpoint can return an error response at 740 to induce the node monitor 710 to cut the traffic to the cloud component 703 in the first zone at 745. The node monitor 710 can be configured to periodically check (request at 735, and 750) with the health endpoint 720 to determine the health status of the cloud component 703, since the health endpoint periodically obtains information about the selected flags from the red button service 701. As long as the node monitor 710 determines that the flag for the component is not pressed, namely, that the status of the component is "Ok" and not "Down", "critical" or other status identifying an outage or an issue, the node monitor 710 forwards (at 755) network traffic to the process 715. When the red button flag is reset, the health endpoint 720 can be notified and can provide status OK to the node monitor 710 to initiate that the traffic to the cloud component 703 in the first zone be resumed.

In some instances, the node monitor 710 may be logically separated from the logic of the red button service 701 and how to determine whether to reconfigure communication flows, redirect traffic, stop traffic, or perform other actions. The node monitor 710 may be configured to perform actions based on obtained responses from the health endpoint 720. In this case, the health endpoint 720 determines the status of the cloud component 703 and notifies the node monitor 710 to react corresponding to the response provided from the health endpoint 720 to the node monitor 710 (as in 740).

Using node monitors in the load balancer provides a simple yet efficient process to handle complex recovery steps. The implementation of the health endpoint 720 is provided by the cloud component. The implemented health endpoint 720 can be used to perform health status checks for various issues or problems that can be identified at the cloud component that can be specific to the application logic and be additional to evaluating indications for raised flags for a component or a segment where the component is running.

FIG. 7B is a block diagram of an example system 765 where a recovery procedure is executed in a cloud platform environment including multiple availability zones in accordance with implementations of the present disclosure. In some implementations, the recovery procedure described in relation to example system 765 can be performed in the context of the recovery as described in relation to FIG. 7A where monitors at load balancers register components to handle the execution of a recovery plan.

In some instances, a data center health service (DCHS) 760 can be configured to run at a cloud platform, such as the cloud platform discussed in relation to FIG. 7A, and also in relation to the cloud platform discussed through the present disclosure. A service instance 785 is running at a first zone 775 of the cloud platform. The DCHS 760 can be the same or substantially the same service as discussed at FIG. 3. In some instances, the DCHS 760 can send push or pull requests to the service instances 785 to determine the health status of the service instance 785. The service instance 785 is configured with an agent that communicates with the DCHS 760 service. The DCHS 760 can determine if the service instance 785 is experiencing an outage. For example, the DCHS 760 can determine there is an outage based on evaluation of health status data determined based on monitoring the performance of instances running at different segments or zones of the cloud platform. In another example, the determination of an outage can be based on user input or other application input indicating an identified outage at the cloud platform. In other examples, the determination can be made based on a combination of manual input and algorithmic evaluation of the input to confirm the outage. Other examples can include implementing a prediction logic to identify an expected outage based on a prediction model generated based on evaluating historical data from monitoring the cloud platform.

In some implementations, the outage at FIG. 7A can be determined to be associated with the segment A on the first zone 775. The service 785 can be registered at a node monitor running on a load balancer 770. A flag can be raised for the service segment A of the first zone 775, for example a red button service such as the red button service 701. The node monitor for the service 785 can determine, based on listening to events for statuses of flags from the red button service, that the segment A status has been determined as critical. As a result, the node monitor 785 can perform actions to terminate the direction of traffic from the load balancer (LB) 770 to the service 785, as this service is running in the segment A that is experiencing an outage. The node monitor 785 can configure communication flows so that further communication flows associated with new network traffic will be provided to a service instance 790 that corresponds to the service instance 785 and that service instance 790 is running at a second zone of the cloud platform. The service instance 785 that is running on the first zone is associated with process flows where a service, Service B, from the first zone sends requests to obtain resources from the service 785. Since the service instances 785 has limited network access (e.g., stop network traffic as described 745 of FIG. 7A), the service B can obtain services from the service instance 790 at the second zone 780. The node monitor (such as the node monitor 710 of FIG. 7A) at the load balancer 770 that is created to monitor the service instance 785, can continue to monitor the health status of the instance 785 (by sending checks to a health check endpoint at the instance 785 or by communicating with the DCHS 760) to determine the status of the service instance 785. A DCHS agent can be deployed at the service instance 785. The DCHS agent can be configured to process events associated with raised red flags, for example, events issued from a red button service as described in the present disclosure. In some instances, the DCHS agent can be configured to listen for events in a passive mode or to actively query the DCHS 760 to determine the red flag statuses and to initiate actions related to the service process of the service 785. For example, if a flag is raised indicating an outage at the service 785, the DCHS agent can trigger a communication to stop the service process on the AZ1 775. In such cases, the raised flag can stop the communication directed toward the instances 785 at the AZ1 775 and the communications can be redirected to the service instance 790 at the second zone AZ2 780. In such a case, the node monitor at the LBs 770 can perform a second function and act as a backup if the DCHS fails to execute the termination of service processes at the service instance 785. For example, the DCHS may fail to execute such actions in cases where the whole runtime of the service instance 785 is slowed down due to hardware issues which can affect the work of any entity running there. The node monitor at the LBs 770 can detect an issue (based on the slow responses or the lack of such from a health endpoint (such as the health endpoint 720 of FIG. 7A) of the service) and take the actions to recover the service instance 785 to the service instance 790 on the second zone 780 AZ2.

Upon determining that the status of the service instance 785 is OK (recovered), a recovery procedure can be triggered, in which case the requests to the service instance 785 can be resumed. For example, the service B can be reconfigured to resume sending requests to the service instance 785 instead of to the service instance 790 that was used based on the recovery procedure and reconfiguration of the communication flows.

By combining DCHS agents and node monitors in load balancers, the risk of experiencing slow performance due to restrictions or constraints of the runtime infrastructure where the cloud component is running can be mitigated. For example, when the component health check endpoint cannot respond, monitors can time out and Load Balancers 770 can automatically interrupt the connections to the cloud instance as having issues (e.g., outage requiring a recovery procedure to be triggered).

FIG. 8A is a sequence diagram for an example method 800 for executing a recovery based on triggering flags for entities running on a multiple availability zones cloud platform, where the entities are configured with agents for monitoring flags and triggering recovery procedures in accordance with implementations of the present disclosure. In some instances, the multiple availability cloud platform can be substantially similar to the cloud platform described in relation to FIG. 2.

In some instances, when an outage is identified at the cloud platform, recovery procedures may be configured and executed to provide high availability without process and services disruptions. In some instances, recovery procedures can be handled (and orchestrated) for cloud components that are not covered by a central authority (e.g., as compared to the central authority solution in FIG. 6) and without registration of the components in load balancers (e.g., as compared to the registration-based solution in FIGS. 7A and 7B). In some instances, red button agents can be installed together with the cloud component's runtime (e.g., inside the virtual machine, container, or pod, among other example infrastructures) where the cloud component is running.

In some instances, cloud platforms can be hosted on multiple zones and/or regions to support high availability and service level performance, for example, if there is an outage or other failure in one of the zones and/or regions. Replication of resources, applications, databases, services, or other entities can be performed on all or some of the multiple zones to achieve at least two entity instances per instance that run at distinct zones. In such multiple availability zone cloud platforms, the health status of entities can be centrally monitored and configurations for recovery processes (e.g., recovery procedures) can be implemented, for example, through node monitors at load balancers or through a central service (as described in, e.g., FIGS. 6, 7A, and 7B). Additionally or alternatively, configuration steps can be performed by component-dedicated agents that can have logic to perform recovery steps to facilitate smooth services from the cloud platform while seamlessly reconfiguring the communication associated with entities having an instance that experiences an outage. Based on reconfiguration of the communication for that entity, requests to the entity can be processed at corresponding instances of the entity in a healthy zone. For example, the configuration steps to perform recovery may include an activation of a new instance in a healthy zone and re-routing of the traffic to that new instance. For example, if a first zone of the cloud platform becomes unusable or unavailable during an outage, a database running at a healthy zone may be promoted from a passive into an active state. As another example, if the first zone is unavailable, instances of entities, such as applications running at the first zone, may be unreachable. Thus, the reconfiguration steps can include traffic redirection. For example, the Internet traffic may be re-directed to the application instances in a second zone(s) that remain healthy while the first zone is experiencing unavailability (e.g., due to an outage). Lack of automated recovery procedures for different types of cloud components or complex (manual) procedures that are time-consuming to execute may incur a negative impact as the service availability may be disrupted, the platform may experience downtime, and the user experience may be affected. In some cases, if an instance of an entity is not available due to an outage and no recovery procedure is implemented in due course, multiple requests towards the instance may create inefficiency in processing and operations by the platform. This may be associated with time delays in responding to requests received at the platform and may also be associated with data loss.

In some implementations, a red button service 805 can be configured at a cloud platform in a same or substantially similar manner as the red button service 805 was described in relation to FIG. 6. The red button service 805 can be implemented at a cloud platform that is the same as or substantially similar to the cloud platform 200 of FIG. 2.

A cloud component 810 is running at a first zone of the cloud platform. The cloud component 810 can be an application, service, or a core service, as described in relation to FIG. 2. The cloud component 810 can be a component that is defined to individually handle recovery procedures, and a central component or a load balancer is not responsible for monitoring flags raised for that component.

In some implementations, the cloud component 810 is configured with a red button agent 815 (that can be substantially similar to the DCHS agent as described in FIG. 7B) and can execute a cloud component process 820. The cloud component process 820 is defined to execute a process flow to provide services to other instances on the cloud platform or outside.

The red button agent 815 can execute requests to the red button service 805 (e.g., periodically, upon received events, according to a defined schedule, or other) to obtain the status of red flags that are selected for the cloud platform. For example, if an outage is identified for the cloud component 810 in the first zone, a flag can be selected for such an outage, and the red button agent 815 can identify the selection of the flag. At 830, it is determined that a flag for an outage of the cloud component has been triggered (e.g., by pressing a red button, as previously described). In response to determining that the flag is triggered, at 835, the red button agent 815 executes a procedure to stop the cloud component process 820 (e.g., execute a script) of the cloud component 810. In some instances, rather than executing a procedure to stop the cloud component process 820 outside of the service, an instruction can be sent to the cloud component process 820 for the process to be stopped. For example, the instruction can be sent to an endpoint of the cloud component instances. In the case where the cloud component process 820 is instructed to stop, the initiation of the stop or deactivation process can be executed through an external procedure to trigger the stop of the process, since the service would be deactivated and would not be able to receive instructions to start itself. In this manner, the instance of the cloud component 810 in the first zone will stop serving any requests, and the requests will be processed by the instance(s) in a healthy zone(s), for example, by a second zone as described in relation to FIGS. 2, 3, and 4. Accordingly, when the flag is changed after the outage for the cloud component 810 is over (e.g., determined through regular requests from the red button agent 815 to the red button service 805), the red button agent 815 can restart the cloud component process 820 in the first zone to perform recovery operations. In some instances, the cloud component 810 provides an interface through which the cloud component process 820 can be started and stopped. In some implementations, the interface can be implemented in the form of a start or stop functionality that, when triggered, can initiate an execution of a script (e.g., via a start or stop script, as discussed above) to manage the lifecycle of the cloud component process 820.

In some instances, the red button agent 815 can be configured to perform actions beyond tracking the red button flag states. For example, as the red button agent is installed alongside the component runtime, the red button agent may internally track other indicators of the cloud component's health and report those indicators to external monitoring tools and/or proactively disable the cloud component instances until issues are remedied. In some implementations, such other indicators can include CPU load, memory usage, swap file usage, or available disk space, among other examples. These indicators can be tracked through the red button agents and/or through other entities running in the cloud component 810. Such indicators are trackable internally from the component and measurements of such indicators can be performed by agents running at the infrastructure (e.g., virtual machine or container) where the component is running. In some instances, external measurements can be performed for the cloud component 810, for example, response time of the component to received requests. In some instances, the red button agent 815 as an internal agent running at the cloud component 810 may not be able to directly measure such response time metrics and may obtain them indirectly. Based on obtained information for one or more indicators of the health of the cloud component 810, the red button agent 815 can manage the execution of the cloud component process 820, e.g., start and stop the process in response to determining the health status of the cloud component 810 based on notifications from the red button service 805.

In some additional instances, some cloud components may require the execution of specific steps for their recovery. In such cases, the red button agent can read a file including instructions relevant for the specific cloud component and can execute the steps together with or without other default steps defined for executing a recovery procedure.

Using red button agents as component agents is a centralized solution which implements a default behavior for disabling the components in the affected zone or zone segments during an outage and requires almost zero efforts by component owners for their adoption. Such an approach addresses cases where communication with the cloud component instances is carried out directly through the IP address and bypassing load balancers. In some instances, the use of red button agents can be performed in combination with the registration of monitors in load balancers (as described in relation to FIG. 7B) to cover a wider range of outages. By combining red button agents and monitors in load balancers, risks for experiencing slow performance due to restrictions or constraints of the runtime infrastructure where the cloud component is running can be mitigated. For example, when the component health check endpoint cannot respond, monitors can time out and load balancers can automatically direct the connections away from the cloud instance having issues (e.g., outage requiring a recovery procedure to be triggered).

Because a red button agent 815 is running in the same runtime infrastructure as the cloud component 810, the red button agent has more flexibility and also has access to perform further actions, thus has more capabilities for monitoring and managing the cloud component.

FIG. 8B is a flowchart for an example method 850 for executing a recovery procedure based on red button agents in accordance with implementations of the present disclosure.

In some instances, the example method 850 can be executed in the context of a cloud component running at a first availability zone of a cloud platform that is a multiple zones platform. The cloud component can be substantially similar to the cloud component 810 of FIG. 8A. The cloud component can be an instance of a service, application, or a database, among others. The cloud component can be running as an instance of an entity, where the entity may be associated with other instances running at various availability zones of the cloud platform.

In some implementations, a red button agent can be configured for a given cloud component instance that is running at a zone of the cloud platform. The red button agent can be substantially similar to the red button agent 815. The red button agent can be installed together with the first cloud component instance's runtime inside the same virtual machine, container, or pod, among other examples. In some instances, the red button agent can be configured to query for red button flags to obtain changes to health status, for example, a red flag status can be raised when a component is associated with an outage (e.g., experiencing an outage itself, or being affected by an outage of another entity to which the component instances is coupled, among other example associations). The red button agent can be implemented to have logic to start and stop a component instance such as the first cloud component instance based on determined changes in the red button flags (start the component instance when an outage is over and stop the instance when an outage is identified). In some instances, the first cloud component instance can be implemented to provide an interface through which the instance can be started and stopped by the red button agent.

At 855, requests are sent from the red button agent to a red button service to obtain red flag statuses that are relevant for outages of components defined for the cloud platform. In some instances, the red button service can be configured to push notifications to the red button agent when a red flag is raised for a respective component. In some instances, the red button agent can be configured to pull such information about the status of red flags, e.g., according to a pull schedule, e.g., every 5 seconds, or every 2 minutes, among other examples. In some instances, the red button service can be substantially similar to the red button service 805 of FIG. 8A. The red button agent can be configured to execute the request periodically, for example, based on a predefined time interval. The red button agent can be installed at a first cloud component instance running at a first zone of the cloud platform including multiple availability zones.

In some instances, the red flag statuses can identify that an outage is associated with the respective components with which the flag is associated. For example, a flag can be defined at zone level. In such examples, if a red flag for the first zone is raised, then the red button service can provide this red flag status to identify and indicate that the whole first zone is in an outage. In some other examples, a red flag status can be defined for a component that is a service, application or a database running at a particular zone of the cloud platform. In some more examples, the red flag status can be defined for a segment of a zone of the cloud platform, for example, for a network segment that is dedicated for running databases, applications, or services.

At 860, in response to receiving a red flag status from the red button service for the first cloud component instance, the red button agent determines that the first cloud component instance is associated with an outage. For example, the red flag status can define that an outage is being experienced by the first cloud component instance, by a network segment where the first cloud component instance is running, or at the first zone where the first cloud component instance is running. In such example cases, the red button agent can determine that the outage that is identified (e.g., by a monitoring service, by a status checker, or by a platform administrator) is affecting the first cloud component instance. The red button agent can implement logic to execute a recovery procedure that can include reconfiguring (e.g., activating/terminating and/or redirecting) the communication and execution of instances on the cloud platform to maintain the provided services even though one or more entities may be experiencing an outage (e.g., network disruption, hardware problems, downtime, etc.). In some implementations, the reconfiguration may not be executed directly through the red button agent. However, the red button agent can control the start and stop of process instances in response to an identified outage. When a process instance is stopped, a load balancer of the cloud platform may detect that the instance is no longer responsive and direct the traffic to other instances of the component that are running at healthy zones (for example, we can call such instances healthy).

In some instances, a load balancer(s) of the cloud platform may be configured to provide an interface that can facilitate communication with red button agents. In some instances, the red button agent can send a request to the load balancer(s) directly to stop traffic directed to a particular instance of a component, as being in an unhealthy state (e.g., running at an unhealthy segment or zone). In some instances, the termination of the particular instance of the component may be performed without a direct instruction from the load balancer(s). In some instances, the red button agent and/or the load balancer(s) can inherently detect that the instance is terminated and initiate a reconfiguration of the communication flow as previously discussed.

At 865, a recovery procedure for the first cloud component instance is executed (e.g., by the red button agent or triggered by the red button agent).

The recovery procedure is executed by initiating a termination of a cloud component process running on the first cloud component instance at 870, and, at 875, by configuring the load balancers of the cloud platform to detect that the instance is stopped because it is not responsive and direct the traffic directed to the component to the other instance, e.g., healthy instances in a healthy zone(s), by redirecting requests to a healthy instance. The cloud component process that is configured at the first cloud component instance is a process flow that is configured to provide services to other instances running on the cloud platform and/or outside of the cloud platform. In some instances, the termination of the execution of the cloud component process can be executed by a procedure to run a script to stop the process. In some instances, the initiation of the termination can be executed by sending an instruction from the red button agent to a predefined endpoint (e.g., an exposed interface) of the first cloud component instance to stop the process.

In some instances, the first cloud component can be associated with an active-passive state mode for the instances of the component (e.g., as discussed in relation to FIG. 4B). When it is determined that an instance of a component is running in a zone associated with an identified outage, as notified based on a selection of a flag, other instance(s) of the component can be determined as available instances at other zones but they can be in a passive mode (not actively processing new requests and e.g., used for back-up). Those passive instances can be started and used to handle further requests directed to the first cloud component. Thus, requests that are directed to the first cloud component can be executed at a second cloud component instance that is running at a second zone. The second zone is a healthy zone not associated with an outage, where the first cloud component instance and the second cloud component instance are instances of the same cloud component running at different zones of the cloud platform, for example, a cloud application. In some instances, when an outage is determined, the first cloud component instance may not be deleted. Instead, processes running at that instance may be terminated, without deleting the component. However, since the processes will be terminated, another instance is changed to an active state. Based on such reconfiguration, the load balancer(s) of the cloud platform can execute requests associated with the first cloud component by distributing requests directed to the cloud component to the other instances (i.e., the second cloud platform instance).

In some instances, the first cloud component can be configured to run instances with an active-active mode and requests that are directed to the first cloud component can be distributed between one or more other instances of the component according to a distribution algorithm. For example, the distribution algorithm can be based on the Round Robin principle. In those instances, load balancers of the cloud platform can distribute requests to those instances that are active and not send requests to instances that are affected by the outage and have their processes terminated.

In some instances, the execution of the recovery procedure as described in relation to steps 865, 870 and 875 can also include the execution of other operations. Generally, the recovery procedure can be predefined for a component or a set of components. In some instances, when a recovery procedure is triggered for execution, a file including instructions for execution of the recovery procedure can be read to determine the steps of the procedure that may be custom and/or generic for the particular component.

In some instances, the red button service can obtain information for the health status of components on the cloud platform and, if the status of the first cloud component instance is changed and not associated with a red flag anymore (the component is no longer associated with an outage), the first cloud component instance can be started again. The start can be initiated by the red button agent upon receiving an indication that the outage is over through the red flag statuses provided by the red button service.

In some instances, the red button agent can be configured for the first cloud component instance in a set up where there is a node monitor running at a load balancer, substantially similar to the load balancer including the node monitor described in FIG. 7B. In such an instance, the first cloud component instance (e.g., a service instance 785 at FIG. 7B) can be configured with a node monitor at a load balancer (e.g., the load balancer 770), while also having a red button agent installed with the first cloud component instance. The red button agent can register the first cloud component instances at the node monitor, and the node monitor can be configured for monitoring the first cloud component instances at the cloud platform.

In such configurations, when it is determined by a node monitor running at the load balancer that the first cloud component instance is associated with an outage, the node monitor can be configured to modify the communication flow towards the first cloud component so that requests to that component can be processed at the second cloud component instance at the second zone of the cloud platform, since the first cloud component instance is affected by an outage and can have a terminated process execution. Also, the execution of the first cloud component instance at the first zone can be terminated, and the execution of the second cloud component instance at the second zone of the cloud platform can be activated.

In some instances, the communication directed to the first cloud component instance may be received directly, and such communication may bypass a load balancer configured for the cloud platform. In those cases, the load balancer would not be able to redirect requests to the first cloud component instance or reconfigure the communication associated with the first cloud component when the instance is associated with an outage. For example, an instance may communicate with the first cloud component instance based on the IP address. In those cases, when the first cloud component instance is determined to be associated with an outage, the red button agent of the first cloud component instance can trigger a recovery procedure and thus, even if there is direct communication towards the first cloud component instance during an outage, the communication can be rerouted to the healthy instance used for the recovery, for example, the second cloud component instance as discussed above. In some instances, a recovery procedure can include terminating the affected cloud component instance of the outage, thus ensuring that that the communication with this component instance will be stopped and/or avoided.

In some instances, in certain cases of outages, such as a slow runtime environment (e.g., hypervisor) where the component and the red button agent are deployed, the red button agent may not be able to access a received indication of a red button flag status. In those cases, if the red button agent is implemented in a configuration where node monitors are also registered in the load balancers, the node monitors may determine that the first cloud component instance is not responsive or responding slowly and, upon meeting threshold criteria for the responses, can automatically trigger a recovery procedure. The node monitor can be configured to call a health check endpoint provided by the first cloud component instance, and, if the responses time out, the load balancer can automatically terminate the connection to the first cloud component instance as identified as an instance associated with problems (e.g., an outage), and services of the first cloud component can be provided by a healthy running instance, such as the second cloud component instance.

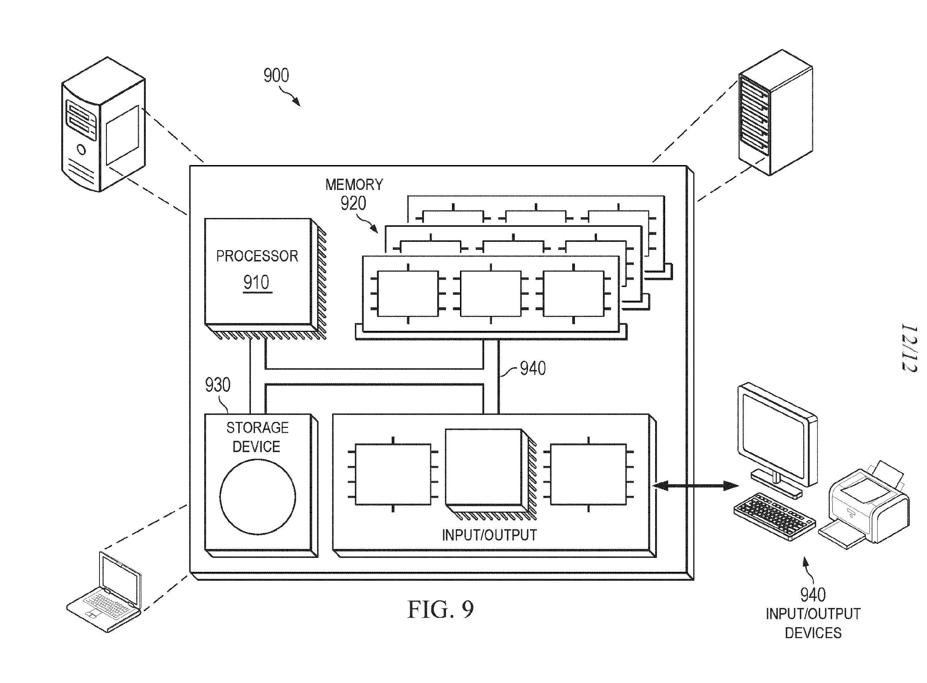

Referring now to FIG. 9, a schematic diagram of an example computing system 900 is provided. The system 900 can be used for the operations described in association with the implementations described herein. For example, the system 900 may be included in any or all of the server components discussed herein. The system 900 includes a processor 910, a memory 920, a storage device 930, and an input/output device 940. The components 910, 920, 930, and 940 are interconnected using a system bus 950. The processor 910 is capable of processing instructions for execution within the system 900. In some implementations, the processor 910 is a single-threaded processor. In some implementations, the processor 910 is a multi-threaded processor. The processor 910 is capable of processing instructions stored in the memory 920 or on the storage device 930 to display graphical information for a user interface on the input/output device 940.

The memory 920 stores information within the system 900. In some implementations, the memory 920 is a computer-readable medium. In some implementations, the memory 920 is a volatile memory unit. In some implementations, the memory 920 is a non-volatile memory unit. The storage device 930 is capable of providing mass storage for the system 900. In some implementations, the storage device 930 is a computer-readable medium. In some implementations, the storage device 930 may be a floppy disk device, a hard disk device, an optical disk device, or a tape device. The input/output device 940 provides input/output operations for the system 900. In some implementations, the input/output device 940 includes a keyboard and/or pointing device. In some implementations, the input/output device 940 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method operations can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random-access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a cathode ray tube (CRT) or liquid crystal display (LCD) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other operations may be provided, or operations may be eliminated, from the described flows, and other components may be added to, or removed from, the described systems. Accordingly, other implementations are within the scope of the following claims.

A number of implementations of the present disclosure have been described. Nevertheless, it will be understood that various modifications may be made without departing from the spirit and scope of the present disclosure. Accordingly, other implementations are within the scope of the following claims.

In view of the above-described implementations of subject matter this application discloses the following list of examples, wherein one feature of an example in isolation or more than one feature of said example taken in combination and, optionally, in combination with one or more features of one or more further examples are further examples also falling within the disclosure of this application.

### Examples

Although the present application is defined in the attached claims, it should be understood that the present invention can also be (alternatively) defined in accordance with the following examples:

### SEGMENTED RECOVERY OF CLOUD COMPONENTS IN A MULTIPLE AVAILABILITY ZONE CLOUD ENVIRONMENT

Example 1. A computer-implemented method, comprising:
identifying a selection of a flag from a set of flags defined at a cloud platform including multiple availability zones, wherein the flag is selected to identify an outage at a first zone of the cloud platform, and wherein each flag of the set of flags is mapped to an entity from a plurality of entities defined for the cloud platform;
determining one or more entities from the plurality of entities defined for the cloud platform associated with recovering the outage based on identifying an entity corresponding to the selected flag; and
in response to determining the one or more entities associated with recovering the outage, initiating a recovery procedure to reconfigure communication flows at the cloud platform associated with the determined one or more entities.

Example 2. The method of Example 1, wherein each entity from the plurality of entities is defined as one of:
a zone segment of the cloud platform;
a cloud component running at a segment of a zone of the cloud platform;
a zone of the multiple availability zones of the cloud platform; or
a load balancer defined for multiple zones of the cloud platform.

Example 3. The method of any one of the preceding Examples, wherein selection of a flag indicates modification of a health status of an entity mapped to the flag to a critical state, and wherein determining the one or more entities from the plurality of entities defined for the cloud platform associated with recovering the outage comprises determining the one or more entities based on an evaluation of the critical state of the mapped entity to the selected flag at an orchestrator component running for the cloud platform to manage communication flows.

Example 4. The method of any one of the preceding Examples, wherein the plurality of entities includes different cloud component types including applications, services, and databases, wherein each type of a cloud component is associated with instances of a respective component type that each run at a respective zone of the multiple availability zones.

Example 5. The method of any one of the preceding Examples, wherein the selection of the flag is received in response to determining an outage in one or more specific segments from the first zone in the cloud platform, and wherein the one or more determined entities are segments from another zone of the cloud platform that is a second zone in the cloud platform.

Example 6. The method of any one of the preceding Examples, wherein starting the recovery procedure comprises:
determining a new process flow to replace a previous process flow including the entity mapped to the selected flag, wherein the new process flow excludes the entity mapped to the selected flag and replaces it with a corresponding entity at another zone of the cloud platform defined for recovery reconfiguring the communication of the entity mapped to the selected flag; and
disabling services provided by the entity mapped to the selected flag and redirecting requests to be received by the entity to the corresponding entity at the another zone.

Example 7. The method of any one of the preceding Examples, wherein starting the recovery procedure comprises:
determining a new process flow to replace a previous process flow including the entity mapped to the selected flag, wherein the new process flow excludes the entity mapped to the selected flag and includes process flows that include only instances of the mapped entity that are executed at another zone of the cloud platform defined for recovery of the mapped entity to the selected flag.

Example 8. The method of any one of the preceding Examples, comprising:
configuring flags at the cloud platform, where each flag, when triggered, generates an event associated with an outage at one or more entities at the cloud platform.

Example 9. The method of any one of the preceding Examples, wherein the plurality of entities defined at the cloud platform are configured to monitor events associated with triggered flags from the set of flags and initiate recovery procedures corresponding to entities associated with the triggered flags.

Example 10. The method of any one of the preceding Examples, further comprising, before receiving the selection of the flag mapped to an entity at the cloud platform, identifying, based on monitored data associated with a health status of the cloud platform that is input at a trained model, the outage at the cloud platform, wherein the outage restrict access to services provided by the entity mapped to the flag that is selected at the cloud platform.

Example 11. The method of any one of the preceding Examples, further comprising:
receiving a notification that the entity mapped to the selected flag is running successfully at the first zone after an outage has been identified and resolved; and
in response to the received notification, initiating a recovery procedure to reconfigure communication flows and define flows through entities running at the first zone of the cloud platform.

Example 12. A system comprising:
one or more processors; and
one or more computer-readable memories coupled to the one or more processors and having instructions stored thereon that are executable by the one or more processors to perform the method of any of Examples 1 to 11.

Example 13. A non-transitory, computer-readable medium coupled to one or more processors and having instructions stored thereon which, when executed by the one or more processors, cause the one or more processors to perform the method of any of Examples 1 to 11.

### MECHANISMS FOR ENABLING RECOFIGURATIONS OF MULTIPLE AVAILABILITY ZONE CLOUD COMPONENTS

Example 1. A computer-implemented method, comprising:
receiving a selection of a flag from a set of flags defined at a cloud platform including multiple availability zones, wherein the selection of the flag is received to trigger a recovery execution for an entity running at a first zone of the cloud platform and mapped to the flag;
determining a type of the entity;
in response to determining the type of the entity, activating either a load balancer monitor or a central service to generate a respective execution plan for the recovery; and
executing, by either the load balancer monitor or the central service, the generated execution plan to reconfigure communication flows at the cloud platform associated with the entity for which recovery execution is triggered.

Example 2. The method of Example 1, wherein the flag is selected to identify an outage at the cloud platform, and wherein each flag of the set of flags is mapped to an entity from entities defined for the cloud platform.

Example 3. The method of any one of Example 1 or 2, further comprising:
configuring a first set of entities of a first type of entities for recovery executions at the central service to manage outages associated with the first type of entities at the cloud platform including multiple availability zones; and
registering a second set of entities of a second type of entities for recovery executions at load balancers at the cloud platform.

Example 4. The method of Example 3, the method further comprising, when determining that the type of the entity is the first type:
sending an instruction by the central service and to a load balancer defined for the cloud platform to restrict network access to the entity at the first zone;
reconfiguring previously defined communication flow towards the entity to a corresponding entity at a second zone of the cloud platform; and
terminating the execution of entity at the first zone and activating the execution of the corresponding entity at the second zone of the cloud platform.

Example 5. The method of Example 3, comprising:
configuring entities of the second type to obtain health status information for triggered flag at the cloud platform; and
when determining that the type of the entity is the second type:
   creating, by a load balancer of the entity, the load balancer monitor for a health status of the entity;
   registering, at the load balancer monitor, a second entity corresponding to the entity and running at a second zone at the cloud platform;
   obtaining information from the entity for a health status of the entity.

Example 6. The method of any one of Examples 1-5, wherein each entity is defined as one of: a zone segment of the cloud platform, a cloud component running at a segment of a zone of the cloud platform, a zone of the multiple availability zones of the cloud platform, or a load balancer defined for multiple zones of the cloud platform.

Example 7. The method of any one of Examples 1-6, wherein the entities include different cloud component types including applications, services, and databases, wherein each type of a cloud component is associated with instances of the entity type that each run at a respective zone of the multiple availability zones.

Example 8. A system comprising:
one or more processors; and
one or more computer-readable memories coupled to the one or more processors and having instructions stored thereon that are executable by the one or more processors to perform the method of any of Examples 1 to 7.

Example 9. A non-transitory, computer-readable medium coupled to one or more processors and having instructions stored thereon which, when executed by the one or more processors, cause the one or more processors to perform the method of any of Examples 1 to 7.

### EXECUTING RECOVERY PROCEDURES BASED ON RED BUTTON AGENTS

Example 1. A computer-implemented method, comprising:
executing requests from a red button agent to a red button service to obtain red flag statuses that are relevant for outages of components defined for a cloud platform, wherein the red button agent is installed at a first cloud component instance running at a first zone of the cloud platform including multiple availability zones;
in response to receiving a red flag status from the red button service for the first cloud component instance, determining that the first cloud component instance is associated with an outage; and
executing a recovery procedure for the first cloud component instance, wherein executing the recovery procedure comprises:
   initiating a termination of a cloud component process running on the first cloud component instance; and
   configuring to send requests directed to the first cloud component instance to a second cloud component instance that is running at a second zone, wherein the second zone is a healthy zone not associated with an outage.

Example 2. The method of Example 1, and wherein the first cloud component instance and the second cloud component instance are instances of a same cloud component running at different zones of the cloud platform.

Example 3. The method of Example 1 or Example 2, the method comprising:
in response to determining that the outage is over, initiating the first cloud component instance to start at the first zone to perform recovery operation.

Example 4. The method of any one of the preceding Examples, wherein the first cloud component instance is configured to execute the cloud component process as a process flow to provide services to other instances running on the cloud platform and/or outside the cloud platform.

Example 5. The method of any one of the preceding Examples, wherein initiating the termination includes executing a procedure to stop the cloud component process running on the first cloud component instance based on executing a script.

Example 6. The method of any one of the preceding Examples, wherein initiating the termination comprises:
sending an instruction to the cloud components process to stop, wherein the instruction is sent to a predefined endpoint of the first cloud component instance.

Example 7. The method of any one of the preceding Examples, the method comprising:
configuring the red button agent to track health indicators of the first cloud component instance to external monitoring tools.

Example 8. The method of any one of the preceding Examples, wherein executing the recovery procedure for the first cloud component instance comprises:
reading a file including instructions for execution as part of the recovery procedure for the first cloud component instance.

Example 9. The method of any one of the preceding Examples, the method comprising:
terminating, by the red agent, the execution of the first cloud component instance at the first zone.

Example 10. The method of any one of the preceding Examples, the method comprising:
in response to determining that the first cloud component instance is associated with the outage by a node monitor running at a load balancer, the node monitor being configured for the first cloud component instance for the cloud platform to:
reconfigure previously defined communication flows towards the first cloud component instance so that the second cloud component instance at the second zone of the cloud platform processes requests directed to the first cloud component instance.

Example 11. The method of Example 10, wherein when the first cloud component instance is running in an active-passive state of running instances for a first cloud component, the reconfiguring of the previously defined communication flows comprises redirecting requests directed towards the first cloud component instance to the second cloud component instances, wherein the method comprises:
activating the execution of the second cloud component instance at the second zone of the cloud platform based on determining that the first cloud component instance is terminated.

Example 12. The method of Example 10, wherein the red button agent registers the first cloud component instance at the node monitor, and wherein the node monitor is configured for monitoring the first cloud component instance at the cloud platform.

Example 13. The method of any one of the preceding Examples, wherein the red button agent is running in a same runtime infrastructure as the first cloud component instance.

Example 14. A computer-implemented method, comprising:
configuring a red button agent at a first entity running at a first zone of a cloud platform including multiple availability zones;
configuring a monitor for evaluating a health status of the first entity, wherein the monitor is configured to perform checks of the health status by communicating with a health endpoint provided by the first entity, and wherein the monitor is configured to trigger a recovery execution based on detecting an outage according to evaluation of the communication with the health endpoint;
determining the outage associated with the first entity based on the monitor determining a healthy status for the first entity based on the communication with the health endpoint or based on a selection of a flag at a red button service that notifies the red button agent; and
triggering the recovery execution, the recovery execution comprising:
   stopping a process running at the first entity at the first zone; and
   reconfigure communication flows at the cloud platform associated with the first entity for which recovery execution is triggered.

Example 15. A system comprising:
one or more processors; and
one or more computer-readable memories coupled to the one or more processors and having instructions stored thereon that are executable by the one or more processors to perform the method of any of Examples 1 to 14.

Example 16. A non-transitory, computer-readable medium coupled to one or more processors and having instructions stored thereon which, when executed by the one or more processors, cause the one or more processors to perform the method of any of Examples 1 to 14.

### RECOVERY OF CLOUD COMPONENTS IN A MULTIPLE AVAILABILITY ZONE CLOUD ENVIRONMENT

Example 1. A computer-implemented method, comprising:
installing a red button agent at a first cloud component instance of a first cloud component running at a first zone of a cloud platform including multiple availability zones;
executing requests from the red button agent to a red button service to obtain status of red flags that are selected for the cloud platform;
in response to receiving a status of a red flag associated with the first cloud component instance, determining that the first cloud component instance is associated with an outage; and
executing a recovery procedure for the first cloud component instance, executing the recovery procedure comprising:
   initiating a termination of a cloud component process running on the first cloud component instance; and
   reconfiguring communication flow directed to the first cloud component to a second cloud component instance that is running at a second zone, wherein the second zone is a healthy zone not associated with an outage, and wherein the first cloud component instance and the second cloud component instance are instances of the same first cloud component running at different zones of the cloud platform.

Example 2. The method of Example 1, the method comprising:
in response to determining that the outage is over, initiating the first cloud component instance to start at the first zone to perform recovery operation.

Example 3. The method of any one of the preceding Examples, wherein the first cloud component instance is configured to execute the cloud component process as a process flow to provide services to other instances running on the cloud platform and/or outside the cloud platform.

Example 4. The method of any one of the preceding Examples, wherein initiating the termination includes executing a procedure to stop the cloud component process running on the first cloud component instance based on executing a script.

Example 5. The method of any one of the preceding Examples, wherein initiating the termination comprises:
sending an instruction to the cloud components process to stop, wherein the instruction is sent to a predefined endpoint of the first cloud component instance.

Example 6. The method of any one of the preceding Examples, the method comprising:
configuring the red button agent to track health indicators of the first cloud component instance to external monitoring tools.

Example 7. The method of any one of the preceding Examples, wherein executing the recovery procedure for the first cloud component instance comprises: reading a file including instructions for execution as part of the recovery procedure for the first cloud component instance.

Example 8. The method of any one of the preceding Examples, the method comprising:
in response to determining that the first cloud component instance is associated with the outage by a node monitor running at a load balancer monitor, the node monitor being configured for the first cloud component instance configured for the cloud platform to
reconfigure previously defined communication flow towards the first cloud component instance to the second cloud component instance at the second zone of the cloud platform.

Example 9. The method of Example 8, wherein the red button agent registers the first cloud component instance at the node monitor, and wherein the node monitor is configured for monitoring the first cloud component instance at the cloud platform.

Example 10. A system comprising:
one or more processors; and
one or more computer-readable memories coupled to the one or more processors and having instructions stored thereon that are executable by the one or more processors to perform the method of any of Examples 1 to 9.

Example 11. A non-transitory, computer-readable medium coupled to one or more processors and having instructions stored thereon which, when executed by the one or more processors, cause the one or more processors to perform the method of any of Examples 1 to 9.

### RECONFIGURING COMMUNICATION FOR ENTITIES RUNNING ON A MULTIPLE AVAILABILITY ZONE CLOUD PLATFORM

Example 1. A computer-implemented method, comprising:
receiving a selection of a flag from a set of flags defined at a cloud platform including multiple availability zones, wherein the flag is selected to identify an outage at a first zone of the cloud platform;
determining an instance of an entity running at the first zone of the cloud platform;
determining a state mode of running instances of the entity at the cloud platform;
in response to determining the state mode, determining rules for executing a recovery procedure for the instance of the entity running at the first zone; and
in response to determining the rules, executing the recovery procedure determined based on to the state mode of running instances of the entity to reconfigure subsequent communication directed to the entity to another one or more instances running at one or more other zones of the cloud platform.

Example 2. The method of Example 1, wherein the selection of the flag is received to trigger the recovery procedure for instances running at the first zone of the cloud platform and mapped to the flag.

Example 3. The method of Example 1 or Example 2, wherein a plurality of entities is running on the cloud platform, wherein each entity is running with one or more instances distributed over one or more availability zones, and wherein each entity from the plurality of entities is defined as one of:
a zone segment of the cloud platform;
a cloud component running at a segment of a zone of the cloud platform;
a zone of the multiple availability zones of the cloud platform; or
a load balancer defined for multiple zones of the cloud platform.

Example 4. The method of Example 3, wherein the plurality of entities includes different cloud component types including applications, services, and databases, and wherein each type of a cloud component is associated with instances of a respective component type that each run at a respective zone of the multiple availability zones.

Example 5. The method of Example 3, wherein each cloud component type of an entity is associated with a respective state mode of running instances of entities of the type, and wherein a state mode of a cloud component type is either an active-active mode or an active-passive mode.

Example 6. The method of any one of the preceding Examples, wherein, when the state mode of running instances of the entity is determined to be an active-passive mode, the determined rules for executing the recovery procedure include rules for reconfiguring the subsequent communication by executing a failover procedure to redirect the subsequent communication directed to the entity to an instance of the entity running in another zone of the cloud platform that is not associated with the selected flag.

Example 7. The method of any one of the preceding Examples, wherein, when the state mode of running instance of the entity is determined to an active-active state, the determined rules for executing the recovery procedure include rules for reconfiguring the subsequent communication by transmitting requests for services from the entity only to other one or more instances running at the one or more zones of the cloud platform, the other one or more zones not being associated with the selected flag.

Example 8. A system comprising:
one or more processors; and
one or more computer-readable memories coupled to the one or more processors and having instructions stored thereon that are executable by the one or more processors to perform the method of any of Examples 1 to 7.

Example 9. A non-transitory, computer-readable medium coupled to one or more processors and having instructions stored thereon which, when executed by the one or more processors, cause the one or more processors to perform the method of any of Examples 1 to 7.

## Claims

1. A computer-implemented method, comprising:
receiving a selection of a flag from a set of flags defined at a cloud platform including multiple availability zones, wherein the flag is selected to identify an outage at a first zone of the cloud platform;
determining an instance of an entity running at the first zone of the cloud platform;
determining a state mode of running instances of the entity at the cloud platform;
in response to determining the state mode, determining rules for executing a recovery procedure for the instance of the entity running at the first zone; and
in response to the determined rules, executing the recovery procedure determined based on to the state mode of running instances of the entity to reconfigure subsequent communication directed to the entity to another one or more instances running at one or more other zones of the cloud platform.

2. The method of claim 1, wherein the selection of the flag is received to trigger the recovery procedure for instances running at the first zone of the cloud platform and mapped to the flag.

3. The method of claim 1 or claim 2, wherein a plurality of entities is running on the cloud platform, wherein each entity is running with one or more instances distributed over one or more availability zones, and wherein each entity from the plurality of entities is defined as one of:
a zone segment of the cloud platform;
a cloud component running at a segment of a zone of the cloud platform;
a zone of the multiple availability zones of the cloud platform; or
a load balancer defined for multiple zones of the cloud platform.

4. The method of claim 3, wherein the plurality of entities includes different cloud component types including applications, services, and databases, wherein each type of a cloud component is associated with instances of a respective component type that each run at a respective zone of the multiple availability zones.

5. The method of claim 3, wherein each cloud component type of an entity is associated with a respective state mode of running instances of entities of the type, wherein a state mode of a cloud component type is either an active-active mode or an active-passive mode.

6. The method of any one of the preceding claims, wherein, when the state mode of running instances of the entity is determined to be an active-passive mode, the determined rules for executing the recovery procedure include rules for reconfiguring the subsequent communication by executing a failover procedure to redirect the subsequent communication directed to the entity to an instance of the entity running in another zone of the cloud platform that is not associated with the selected flag.

7. The method of any one of the preceding claims, wherein, when the state mode of running instance of the entity is determined to an active-active state, the determined rules for executing the recovery procedure include rules for reconfiguring the subsequent communication by transmitting requests for services from the entity only to other one or more instances running at the one or more zones of the cloud platform, the other one or more zones not being associated with the selected flag.

8. A system comprising:
one or more processors; and
one or more computer-readable memories coupled to the one or more processors and having instructions stored thereon that are executable by the one or more processors to perform the method of any of claims 1 to 7.

9. A non-transitory, computer-readable medium coupled to one or more processors and having instructions stored thereon which, when executed by the one or more processors, cause the one or more processors to perform the method of any of claims 1 to 7.
